(19) Europäisches Patentamt / European Patent Office / Office européen des brevets

(11) **EP 3 404 881 B1**

(12) **EUROPEAN PATENT SPECIFICATION**

(45) Date of publication and mention
of the grant of the patent:
**29.12.2021 Bulletin 2021/52**

(21) Application number: **16894842.0**

(22) Date of filing: **21.03.2016**

(51) Int Cl.:
**H04L 27/26** (2006.01)    **H04B 3/02** (2006.01)

(86) International application number:
**PCT/CN2016/076925**

(87) International publication number:
**WO 2017/161483 (28.09.2017 Gazette 2017/39)**

(54) **SIGNAL TO NOISE RATIO (SNR) PROCESSING METHOD, APPARATUS AND SYSTEM**

VERFAHREN, VORRICHTUNG UND SYSTEM ZUR VERARBEITUNG DES
SIGNAL-RAUSCH-VERHÄLTNISSES (SNR)

PROCÉDÉ, APPAREIL ET SYSTÈME DE TRAITEMENT DE RAPPORT SIGNAL SUR BRUIT (SNR)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(43) Date of publication of application:
**21.11.2018 Bulletin 2018/47**

(73) Proprietor: **Huawei Technologies Co., Ltd.**
**Longgang District**
**Shenzhen, Guangdong 518129 (CN)**

(72) Inventors:
• **LIU, Jianhua**
  **Shenzhen**
  **Guangdong 518129 (CN)**
• **LIU, Ruosi**
  **Shenzhen**
  **Guangdong 518129 (CN)**

(74) Representative: **Maiwald Patent- und**
**Rechtsanwaltsgesellschaft mbH**
**Elisenhof**
**Elisenstraße 3**
**80335 München (DE)**

(56) References cited:
WO-A1-2015/038141    CN-A- 101 547 179
US-A1- 2006 153 309    US-B2- 7 711 066

• RUI CHEN ET AL: "Inter-carrier cooperative
coding/decoding for OFDM systems using
geometric mean decomposition", WIRELESS
COMMUNICATIONS, NETWORKING AND
INFORMATION SECURITY (WCNIS), 2010 IEEE
INTERNATIONAL CONFERENCE ON, IEEE,
PISCATAWAY, NJ, USA, 25 June 2010
(2010-06-25), pages 1-3, XP031729223, ISBN:
978-1-4244-5850-9
• EDWARD PEH ET AL: "Power and Modulo Loss
Tradeoff for Tomlinson-Harashima Precoding
Applied to Geometric Mean Decomposition
based MIMO Systems", IEEE INTERNATIONAL
SYMPOSIUM ON PERSONAL, INDOOR AND
MOBILE RADIO COMMUNICATIONS. PIMRC,
IEEE; PI, XX, 1 September 2007 (2007-09-01),
pages 1-5, XP031168814, ISBN:
978-1-4244-1143-6
• SHAOWEI LIN ET AL: "Block-Diagonal Geometric
Mean Decomposition (BD-GMD) for Multiuser
MIMO Broadcast Channels", PERSONAL,
INDOOR AND MOBILE RADIO
COMMUNICATIONS, 2006 IEEE 17TH INTER
NATIONAL SYMPOSIUM ON, IEEE, PI, 1
September 2006 (2006-09-01), pages 1-5,
XP031023646, ISBN: 978-1-4244-0329-5

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

**TECHNICAL FIELD**

Embodiments of the present invention relate to the field of wired communications technologies, and specifically, to a signal-to-noise ratio SNR processing method, an apparatus, and a system.

**BACKGROUND**

In a digital subscriber line (DSL) communications system, a discrete multi-tone (DMT) modulation scheme is usually used. To be specific, a bandwidth occupied by a communication channel is divided into several independent subcarriers that are equally spaced and used to transmit signals concurrently. An overall transmission rate of the DSL communications system depends on a sum of quantities of bits loaded on the subcarriers, and a quantity of bits loaded on each subcarrier depends on a signal-to-noise ratio (SNR) of a channel corresponding to a frequency of the subcarrier. A higher SNR indicates a larger quantity of bits loaded on a corresponding subcarrier, and indicates a higher total transmission rate of the DSL communications system. A formula for calculating a quantity $b_i$ of bits loaded on an $i^{th}$ subcarrier is:

$$\mathbf{b_i = min(round(log_2(1 + SNR_i)),\ bit_{max})};$$

where $SNR_i$ represents an SNR of a channel corresponding to the $i^{th}$ subcarrier, $bit_{max}$ represents a maximum quantity of bits allowed to be loaded in the communications system, round represents rounding off to an integer, and $bit_{max}$ is defined in each standard of the communications system. For example, $bit_{max}$ is defined as 15 bits in the very-high-speed digital subscriber line 2 (VDSL2) standard, and $bit_{max}$ is defined as 12 bits in the G.fast standard. In an actual communications system, considering functions of modulation and coding, in the formula for calculating the quantity $b_i$ of bits loaded on the $i^{th}$ subcarrier, $SNR_i$ is replaced with $SNR_i+CodeGain-SNR_{Gap}-Margin$. CodeGain represents a code gain of the communications system, $SNR_{Gap}$ represents a gap between a Shannon limit and an SNR that is needed by quadrature amplitude modulation (QAM) when a bit error rate (BER) of the communications system is $10^{-7}$, and Margin is a margin reserved for actually loading an SNR.

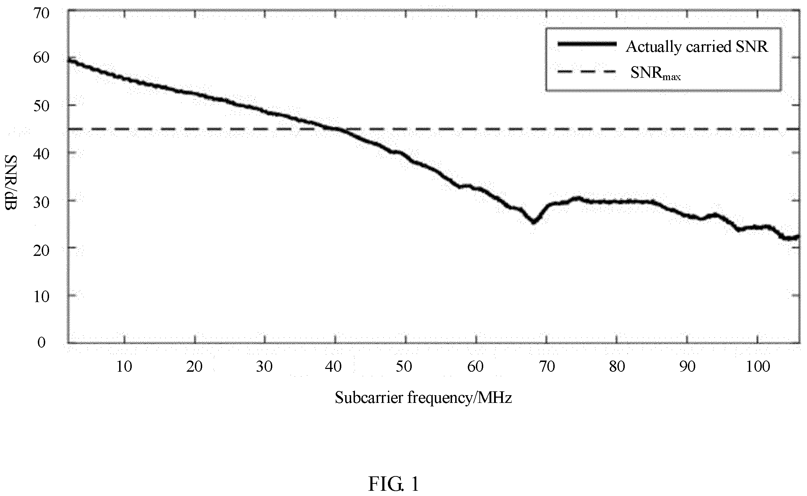

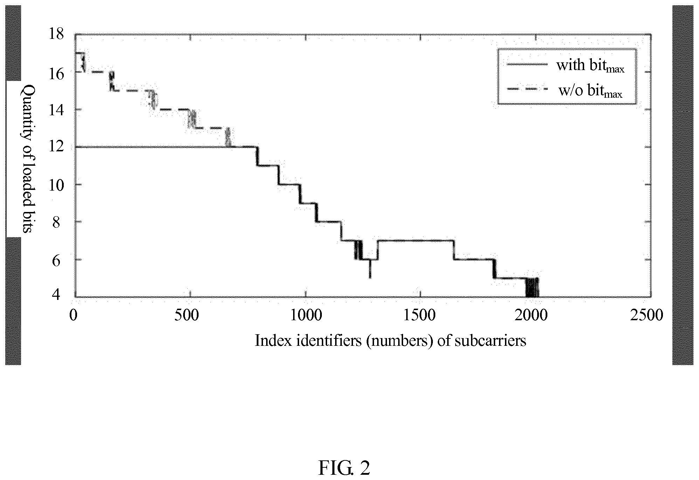

In an actual communications system, an SNR distribution of a channel attenuates with an increase of a subcarrier frequency, SNRs actually carried on channels corresponding to some low-frequency subcarriers exceed a system-stipulated $SNR_{max}$ (an SNR required when a quantity of bits loaded on a subcarrier is $bit_{max}$), and SNRs actually carried on channels corresponding to some high-frequency subcarriers are far less than the $SNR_{max}$. Using a G.fast communications system as an example, when a power spectral density (PSD) of an input signal is -80 dBm/Hz, CodeGain is 7 dB, $SNR_{Gap}$ is 9.8 dB, Margin is 6 dB, $bit_{max}$ is 12 bits, a channel line length is 100 m, and a total bandwidth occupied by a communication channel is 106 MHz, distribution of an SNR of a channel on different subcarriers may be shown in FIG. 1. FIG. 1 is a schematic distribution diagram of an SNR of a channel in an existing G.fast communications system. A dashed line in FIG. 1 represents an SNR (namely, an SNRmax) required when a quantity of loaded bits is $bit_{max}$, and a solid line in FIG. 1 represents SNRs actually carried on subcarriers having different frequencies. A distribution of quantities of bits loaded on subcarriers is shown in FIG. 2. FIG. 2 is a schematic distribution diagram of quantities of bits loaded on subcarriers in the existing G.fast communications system. A solid line in FIG. 2 represents quantities of bits loaded on the subcarriers due to a limitation of $bit_{max}$, and a dashed line in FIG. 2 represents quantities of bits loaded on the subcarriers without a limitation of $bit_{max}$. As shown in FIG. 1, an SNR distribution of a channel is in an attenuation trend with an increase of a subcarrier frequency. For example, an SNR of a channel corresponding to a subcarrier below 20 MHz may reach more than 50 dB, and an SNR of a channel corresponding to a subcarrier above 60 MHz is below 30 dB. As shown in FIG. 2, due to a limitation of $bit_{max}$, a channel corresponding to a subcarrier whose subcarrier index identifier is below 800 corresponds to a channel corresponding to a subcarrier whose frequency is below 40 MHz in FIG. 1. Although the G.fast communications system has a capability of loading an SNR higher than the $SNR_{max}$, an SNR actually required by the G.fast communications system can only be equal to the $SNR_{max}$.

As can be learned, due to a limitation of a maximum quantity $bit_{max}$ of bits loaded on a subcarrier, although channels corresponding to some low-frequency subcarriers have excessively high SNR capabilities in the communications system, SNRs actually required by the channels corresponding to the low-frequency subcarriers can only be equal to the $SNR_{max}$, leading to an SNR waste, and further reducing a transmission capacity of the communications system.

Rui Chen; et al.: Inter-carrier cooperative coding/decoding for 0FDM systems using geometric mean decomposition; Wireless Communications, Networking And Information Security (WCNIS), 2010, discloses an inter-carrier cooperative coding / decoding (ICC) scheme that can transform subcarriers of an OFDM system into the same number of sub-channels with identical capacities. For this, a channel is divided into N obtain identical parallel subchannels, using a GMD (geometric mean decomposition) technique.

Edward Peh; et al.: Power and Modulo Loss Tradeoff for Tomlinson-Harashima Precoding Applied to Geometric Mean Decomposition based MIMO Systems; IEEE International Symposium on Personal, Indoor and Mobile Radio Communications, PIMRC, 2007, discloses a Tomlinson-Harashima Precoding (THP) scheme combined with GMD, to decouple a multiple-input multiple-output (MIMO) channel into multiple single-input single-output (SISO) subchannels with identical SNRs.

Shaowei Lin; et al.: Block-Diagonal Geometric Mean Decomposition (BD-GMD) for Multiuser MIMO Broadcast Channels; Personal, Indoor and Mobile Radio Communications, 2006, discloses a GMD technique, where THP is applied. Due to this, each user using a multiuser MIMO broadcast channel can achieve identical SNRs for its subchannels.

US 7,711,066 B2 discloses systems and a method for implementing a uniform channel decomposition (UCD) scheme. The UCD scheme decomposes a MIMO channel into a plurality of subchannels over which communication signals are conveyed.

## SUMMARY

Embodiments of the present invention provide a signal-to-noise ratio SNR processing method, an apparatus, and a system, as respectively claimed in claims 1, 4 and 7, so as to improve SNR utilization of a communications system, and further increase a transmission capacity of the communications system.

## BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic distribution diagram of SNRs of a channel in an existing Gfast communications system;
FIG. 2 is a schematic distribution diagram of quantities of bits loaded on subcarriers in an existing G.fast communications system;
FIG. 3 is a schematic architectural diagram of an application architecture according to an embodiment of the present invention;
FIG. 4 is a schematic flowchart of a signal-to-noise ratio SNR processing method according to an embodiment of the present invention;
FIG. 5 is a schematic diagram of a principle of a multiple-input multiple-output MIMO communications system based on a singular value decomposition SVD algorithm according to an embodiment of the present invention;
FIG. 6 is a schematic diagram of a principle of a signal-to-noise ratio SNR processing method according to an embodiment of the present invention;
FIG. 7 is a schematic diagram of a principle of another signal-to-noise ratio SNR processing method according to an embodiment of the present invention;
FIG. 8 is a schematic diagram of a principle of still another signal-to-noise ratio SNR processing method according to an embodiment of the present invention;
FIG. 9A and FIG. 9B are a schematic comparison diagram of simulation results in a Gfast communications system according to an embodiment of the present invention;
FIG. 10A and FIG. 10B are a schematic diagram of a comparison result of simulation results in another Gfast communications system according to an embodiment of the present invention;
FIG. 11A and FIG. 11B are a schematic comparison diagram of simulation results in still another Gfast communications system according to an embodiment of the present invention;
FIG. 12 is a schematic structural diagram of a transmit end according to an embodiment of the present invention;
FIG. 13 is a schematic structural diagram of another transmit end according to an embodiment of the present invention;
FIG. 14 is a schematic structural diagram of still another transmit end according to an embodiment of the present invention; and
FIG. 15 is a schematic structural diagram of a signal-to-noise ratio SNR processing system according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

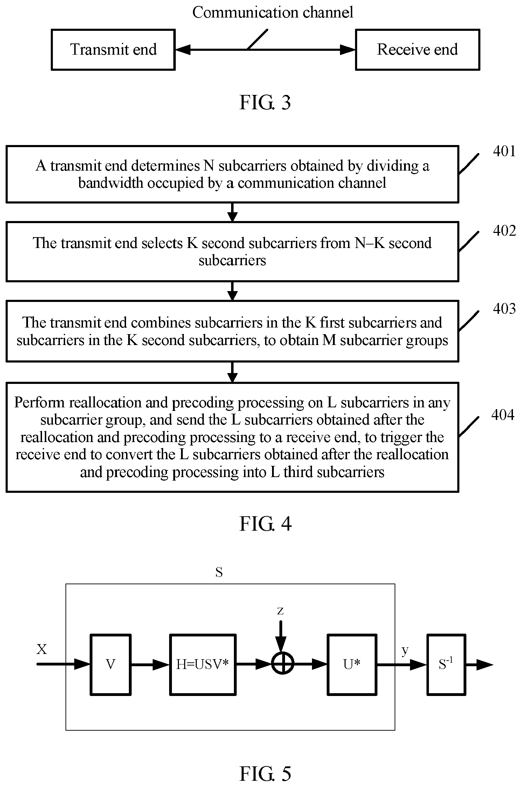

To better understand a signal-to-noise ratio SNR processing method, an apparatus, and a system that are provided in the embodiments of the present invention, the following first describes an application architecture to which the embodiments of the present invention are applicable. Referring to FIG. 3, FIG. 3 is a schematic architectural diagram of an application architecture according to an embodiment of the present invention. As shown in FIG. 3, the application architecture may include a transmit end and a receive end. The transmit end may communicate with the receive end by using a communication channel, and the communication channel is divided into several independent subcarriers that are equally spaced and used to transmit signals concurrently. The transmit end adds, to a plurality of subcarriers, a signal needing to be sent, and sends the signal to the receive end. The communication channel has a frequency selection feature, and this is not limited in the embodiments of the present invention.

Referring to FIG. 4, FIG. 4 is a schematic flowchart of a signal-to-noise ratio SNR processing method according to an embodiment of the present invention. The method in FIG. 4 may be applied to a communications system that includes a transmit end and a receive end, for example, a DSL communications system. As shown in FIG. 4, the signal-to-noise ratio SNR processing method may include the following steps.

401. The transmit end determines N subcarriers obtained by dividing a bandwidth occupied by a communication channel.

In this embodiment of the present invention, the N subcarriers include K first subcarriers and N-K second subcarriers, an SNR of a channel corresponding to each of the K first subcarriers is greater than a maximum signal-to-noise ratio $SNR_{max}$, an SNR of a channel corresponding to each of N-K second subcarriers is less than or equal to the $SNR_{max}$, the $SNR_{max}$ is an SNR required when a quantity of bits loaded on a subcarrier reaches a maximum quantity $bit_{max}$ of bits, and $0<K<N/2$.

402. The transmit end selects K second subcarriers from N-K second subcarriers.

403. The transmit end combines subcarriers in K first subcarriers and subcarriers in the K second subcarriers, to obtain M subcarrier groups.

In this embodiment of the present invention, each of the M subcarrier groups includes a same quantity of first subcarriers and a same quantity of second subcarriers, and $0<M\leq K$.

404. The transmit end performs reallocation and precoding processing on L subcarriers in any subcarrier group, and sends the L subcarriers obtained after the reallocation and precoding processing to the receive end, to trigger the receive end to convert the L subcarriers obtained after the reallocation and precoding processing into L third subcarriers.

In this embodiment of the present invention, L is a quantity of subcarriers in each subcarrier group, and SNRs of channels corresponding to third subcarriers obtained after conversion is performed for each subcarrier group are the same, and are equal to a product of SNRs of channels corresponding to all subcarriers in the subcarrier group raised to the power of 1/L. For example, it is assumed that one subcarrier group includes two first subcarriers and two second subcarriers, SNRs of channels corresponding to the first subcarriers are respectively an $SNR_a$ and an $SNR_b$, and SNRs of channels corresponding to the second subcarriers are respectively an $SNR_c$ and an $SNR_d$. In this case, a value of L is 4, and each of SNRs of channels corresponding to four third subcarriers obtained after conversion is performed for the subcarrier group is equal to $(SNR_a \times SNR_b \times SNR_c \times SNR_d)^{1/4}$.

As can be learned, in this embodiment of the present invention, a subcarrier whose corresponding channel has a relatively high SNR and a subcarrier whose corresponding channel has a relatively low SNR are combined into one subcarrier group, and subcarriers in each subcarrier group are converted into subcarriers whose corresponding channels have a same SNR, and a quantity of the subcarriers obtained after the conversion is the same as a quantity of the subcarriers included in the subcarrier group. Therefore, some SNRs are relocated from subcarriers having relatively high SNRs to subcarriers having relatively low SNRs, an SNR waste in the communications system is reduced, SNR utilization is improved, and further a transmission capacity of the communications system is increased. In addition, compared with the prior art that SNR utilization is improved by increasing $bit_{max}$, in this embodiment of the present invention, a marginal income of a communications system does not need to be reduced, and no analog-to-digital converter or digital-to-analog converter having a higher bit width needs to be used for matching, thereby reducing costs of the communications system.

In an optional embodiment, before step 404, the signal-to-noise ratio SNR processing method may further include the following operation:

The transmit end performs the following decomposition on the channels corresponding to the subcarriers in each subcarrier group by using a geometric mean decomposition (GMD) algorithm:

$$H = QRP^*,$$

where * represents conjugate transpose of a matrix, the matrix H is a matrix of channels corresponding to subcarriers in each subcarrier group, the matrix Q and the matrix P are unitary matrices, a property of a unitary matrix is that a product of a unitary matrix and a conjugate transpose matrix of the unitary matrix is an identity matrix I, the matrix R is an upper triangular matrix or a lower triangular matrix, and diagonal elements of the matrix R are equal to a geometric mean of singular values of the matrix H. To be specific, the channels corresponding to the subcarriers in each subcarrier group may be represented by using one channel matrix H, subcarriers in different subcarrier groups correspond to different channel matrices H, and each matrix H can be decomposed into a product of the unitary matrix Q, the upper triangular matrix or lower triangular matrix R, and the conjugate transpose matrix P* of the unitary matrix P by using the GMD algorithm.

The transmit end sends, to the receive end, the matrix Q obtained after the matrix H of the channels corresponding to the subcarriers in each subcarrier group is decomposed, so that the receive end generates the conjugate transpose matrix Q* of the matrix Q and prepares for SNR reallocation.

It should be noted that for a multiple-input multiple-output (MIMO) communications system having a plurality of communication lines, it is assumed that crosstalk exists between m lines, $H_{m \times m}$ represents a crosstalk MIMO channel, a diagonal element $h_{ii}$ of $H_{m \times m}$ represents a direct channel from an $i^{th}$ input to an $i^{th}$ output, and a non-diagonal element $h_{ij}$ represents a crosstalk channel from a $j^{th}$ line to an $i^{th}$ line. A singular value decomposition (SVD) algorithm is a commonly seen method for cancelling crosstalk of the matrix H. SVD decomposition of the matrix H is represented as H=USV*. U and V are unitary matrices, S is a diagonal matrix, and diagonal elements of S are singular values of the matrix H that are arranged in descending order. Therefore, provided that the matrices V and U* are respectively preset in the transmit end and the receive end, component cancellation can be performed for U and V* of the matrix H by using the property of the unitary matrix: UU*=I and VV*=I, in other words, the channel is equalized to a crosstalk-free diagonal matrix S. As shown in FIG. 5, FIG. 5 is a schematic diagram of a principle of a multiple-input multiple-output MIMO communications system based on a singular value decomposition SVD algorithm according to an embodiment of the present invention. Assuming that a transmit signal is X=[x1, x2, ..., xm], a receive signal Y may be represented as:

$$Y=U*(HVX+z)=U*USV*VX+U*z=SX+U*z,$$

where the equation represents that the equivalent channel of the communications system is a crosstalk-free diagonal matrix S. In other words, crosstalk of a crosstalk channel is cancelled through SVD decomposition.

In this embodiment of the present invention, the GMD algorithm is a matrix decomposition algorithm based on the SVD algorithm. The channel matrix H is decomposed into a product of three matrix components: Q, R, and P*. Q and P are unitary matrices, R is an upper triangular matrix or a lower triangular matrix, and the diagonal elements of R are equal to the geometric mean of the singular values of the matrix H, namely, a geometric mean of diagonal elements of a matrix S obtained after SVD decomposition is performed on the matrix H. Non-diagonal elements of R are not zero. To be specific, inter-channel crosstalk exists. However, after non-linear coding of a Tonlinson Harashima precoder (THP), crosstalk channels of $H_{n \times m}$ in the original MIMO communications system may be equalized to m equal crosstalk-free channels provided that a power of a transmit signal is not increased. In this way, m crosstalk-free channels that are arranged in descending order of channel capacities and that are obtained by using the SVD decomposition method are converted, by using the GMD decomposition method, into m crosstalk-free channels having completely equal channel capacities, and this is equivalent to that SNRs of m different channels are equally allocated provided that a product is not changed. Therefore, for the entire communications system, a total system capacity remains unchanged.

Based on the foregoing conclusion, using the GMD algorithm can equally reallocate SNRs of m × m crosstalk-free channels, and crosstalk caused by the GMD algorithm can be cancelled without increasing a transmit power. Using the GMD algorithm can reallocate a wasted SNR from a channel corresponding to a low-frequency subcarrier to a channel corresponding to a high-frequency subcarrier, thereby increasing an overall transmission capacity of the communications system.

In this optional embodiment, a specific manner in which the transmit end performs the reallocation and precoding processing on the L subcarriers in any subcarrier group, and sends the L subcarriers obtained after the reallocation and precoding processing to the receive end, to trigger the receive end to convert the L subcarriers obtained after the reallocation and precoding processing into the L third subcarriers may be:

performing the reallocation and precoding processing for any subcarrier group by using the matrix P that is in the transmit end and that is obtained after the channel matrix H corresponding to the subcarrier group is decomposed, and sending the subcarrier group obtained after the reallocation and precoding processing to the conjugate transpose matrix Q* of the matrix Q that is in the receive end and that is obtained after the channel matrix H corresponding to the subcarrier group is decomposed, to perform reallocation signal cancellation, to perform conversion for each subcarrier group to obtain the L third subcarriers, in other words, equalize channels corresponding to subcarriers in each subcarrier group to equal channels.

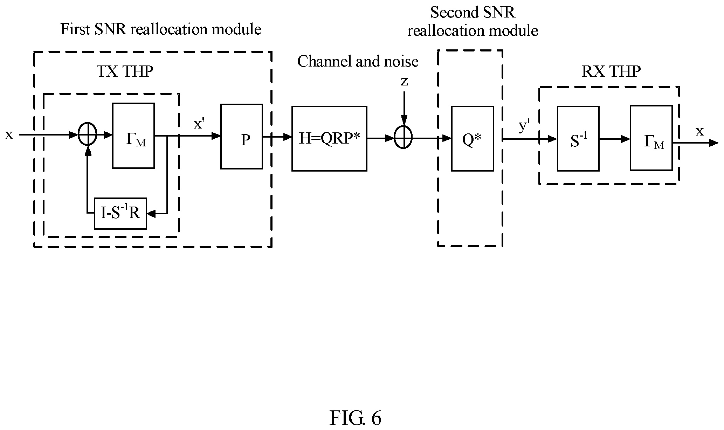

Specifically, a principle of converting subcarriers in each subcarrier group into third subcarriers having equal SNRs in step 404 may be shown in FIG. 6. FIG. 6 is a schematic diagram of a principle of a signal-to-noise ratio SNR processing method according to an embodiment of the present invention. As shown in FIG. 6, for any one of the M subcarrier groups, an SNR processing procedure is jointly implemented by a first SNR reallocation module in the transmit end, channels corresponding to a subcarrier group in a communication channel, and a second SNR reallocation module in the receive end. The first SNR reallocation module includes a THP module and a matrix P. A matrix H of channels corresponding to subcarriers in any subcarrier group is decomposed into QRP* by using the GMD algorithm. The second SNR reallocation module includes a conjugate transpose matrix Q* of a unitary matrix Q. The channels corresponding to the subcarriers in the subcarrier group are virtualized into virtual channels in a manner of adding the matrix P in the transmit end and adding the matrix Q* in the receive end, an equivalent matrix of the virtual channels is a triangular matrix R, and values in a diagonal line of the matrix R are a geometric mean of singular values of the matrix H.

For example, it is assumed that a quantity L of subcarriers in a subcarrier group is equal to 2, and for any subcarrier group $(f_{hi}, f_{li})$, it is assumed that an input signal is x=[x1, x2], x1 is a signal of $f_{hi}$, x2 is a signal of $f_{li}$, and a matrix H of corresponding channels is a $2 \times 2$ diagonal matrix, and may be represented as:

$$\mathbf{H} = \begin{pmatrix} h_{hi} & 0 \\ 0 & h_{li} \end{pmatrix}.$$

$h_{hi}$ is channel attenuation of a subcarrier $f_{hi}$, and $h_{li}$ is channel attenuation of a subcarrier $f_{li}$.

A THP module adjusts a transmit power of a signal x, an output signal of the THP module is **x**' = [x1', x2'], an output signal of the matrix Q* is y' = [yl', y2'], and y' may be represented as follows by using x':

$$y' = Q^*(HPx' + z) = Q^*(QRP^*Px' + z) = Rx' + Q^*z = Rx' + z'.$$

z is an additive white Gaussian noise with a mean value of 0, and z'=Q*z. In other words, the channel matrix H, the matrix Q* in the receive end, and the matrix P in the transmit end form the equivalent channel matrix R, and the equivalent matrix R may be represented as:

$$R = \begin{pmatrix} \overline{\delta} & 0 \\ r_{hl} & \overline{\delta} \end{pmatrix}.$$

$\overline{\delta}$ is the geometric mean of the singular values of a matrix H. Because the matrix H is a diagonal matrix, a value of $\delta$ is $\sqrt{h_{hi} \times h_{li}}$. To cancel crosstalk, an I-S$^{-1}$R module in the THP module is used, so that Sx=Rx'. The matrix S may be represented as:

$$S = \begin{pmatrix} \overline{\delta} & 0 \\ 0 & \overline{\delta} \end{pmatrix}.$$

Then, y' may be re-represented as: y' = Sx + z'. S$^{-1}$ processing may be performed on y' by using the THP module in the receive end, to restore the signal x. To be specific:

$$S^{-1}y' = S^{-1}(Sx + z') = x + S^{-1}z'.$$

A transmit power of x' increases after the signal x is transmitted through I-S$^{-1}$R module. A $\Gamma_M$ module in the THP module performs a modulo operation, to reduce the power of **x**' to an allowable range of the communications system. The $\Gamma_M$ module in the THP module in the receive end performs signal restoration. A calculation formula of outputting **x**' by the $\Gamma_M$ module is:

$$x' = \left[-\frac{M}{2} + \left(Re(\tilde{x}) + \frac{M}{2}\right) \bmod M\right] + j \cdot \left[-\frac{M}{2} + \left(Im(\tilde{x}) + \frac{M}{2}\right) \bmod M\right].$$

A calculation formula of the modulo operation is a mod b = a — b * floor(a/b). For constellation diagrams of different bits, values of M may be:

$$M = \begin{cases} 4 \cdot G_i \cdot TSS_i, & bit = 1 \\ \frac{8\sqrt{5}}{5} \cdot G_i \cdot TSS_i, & bit = 3 \\ \frac{2^{N+1}\sqrt{3}}{2^{2N}-1} \cdot G_i \cdot TSS_i, & bit = 2N, N \geq 1 \\ \frac{6\sqrt{3} \cdot 2^{N-2}}{\sqrt{31 \cdot 2^{2N-6}-1}} \cdot G_i \cdot TSS_i, & bit = 2N-1, N \geq 3 \end{cases}.$$

In addition, in an actual application, an optimal value of M is selected to achieve an objective of a minimum transmit power.

Optionally, the selecting, by the transmit end, K second subcarriers from the N-K second subcarriers may include: selecting, by the transmit end from the N-K second subcarriers, K second subcarriers whose corresponding channels have a maximum SNR. In this way, equalized SNR allocation can be better implemented.

In an optional implementation, the combining, by the transmit end, subcarriers in the K first subcarriers and subcarriers in the K second subcarriers, to obtain M subcarrier groups may include:

sequentially determining, by the transmit end from the K second subcarriers,
different target second subcarriers for different first subcarriers in the K first subcarriers; and
determining, by the transmit end as one subcarrier group, each of the K first subcarriers and a target second subcarrier determined for the first subcarrier, to obtain the M subcarrier groups, where M is equal to K, where an $SNR_{X2}$ of a channel corresponding to a target second subcarrier determined for an $X^{th}$ first subcarrier in the K first subcarriers satisfies the following condition:

$$\left| \frac{(SNR_{max})^2}{SNR_{X1}} - SNR_{X2} \right| < \left| SNR_{Y2} - \frac{(SNR_{max})^2}{SNR_{X1}} \right|,$$

where the SNRxi is an SNR of a channel corresponding to the $X^{th}$ first subcarrier, the $SNR_{Y2}$ is an SNR of a channel corresponding any second subcarrier in the K second subcarriers other than target second subcarriers determined for the first X-1 first subcarriers in the K first subcarriers, and 1≤X≤K.

In this optional implementation, optionally, the sequentially determining, by the transmit end from the K second subcarriers, different target second subcarriers for different first subcarriers in the K first subcarriers may be specifically: sequentially determining, by the transmit end from the K second subcarriers, a target second subcarrier for each of the K first subcarriers in descending order of SNRs of corresponding channels. A condition satisfied by an $SNR_{X2}$ of a channel corresponding to a target second subcarrier determined for the $X^{th}$ first subcarrier in the K first subcarriers can ensure that an SNR of a channel corresponding to a third subcarrier obtained after conversion is closest to the $SNR_{max}$, thereby improving utilization of an SNR of a channel corresponding to a low-frequency subcarrier.

For example, it is assumed that a DSL communications system includes N subcarriers: f1, f2, ..., fN, and there are K first subcarriers whose corresponding channels have SNRs greater than the $SNR_{max}$. The K first subcarriers are arranged in ascending order of the SNRs of the corresponding channels as: FH=[fh1, fh2, ..., fhK], and K<N/2. K second subcarriers are selected from N-K second subcarriers whose corresponding channels have SNRs less than or equal to the $SNR_{max}$, and the K second subcarriers are arranged in descending order of the SNRs of the corresponding channels as: FL=[fl1, fl2, ..., flK]. Each of the K first subcarriers and each of the K second subcarriers are combined, to obtain the M subcarrier groups, namely, (fh1, fl1), (fh2, fl2), ..., (fhK, flK). A grouping method is: starting from the 1st first subcarrier of the FH, assuming that an SNR of an $X^{th}$ subcarrier fhX satisfying SNR>$SNR_{max}$ is an $SNR_{hx}$, a subcarrier whose SNR is an $SNR_{1x}$ is selected from the N-K second subcarriers as flX, where a value of the $SNR_{1x}$ is closest to

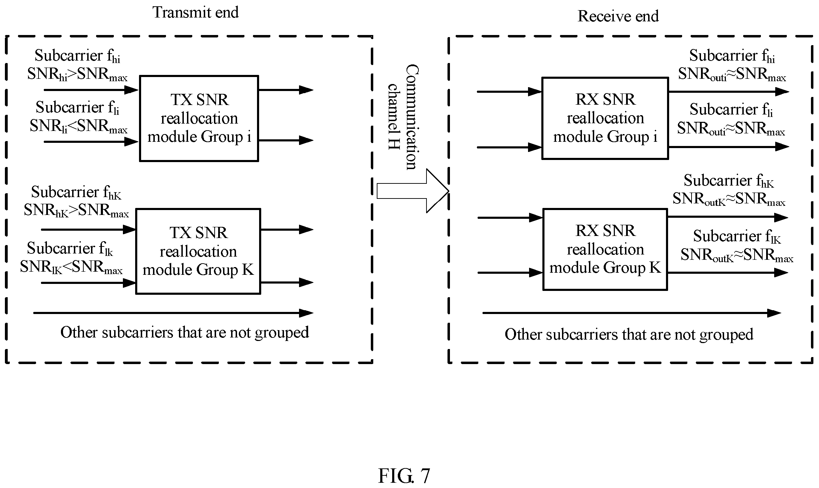

$\mathrm{SNR}^2_{\max}/\mathrm{SNR}_{hX}$, and fhX and flX form one group. In this case, a schematic diagram of a principle of reallocating SNRs of channels corresponding to the K subcarrier groups may be shown in FIG. 7. FIG. 7 is a schematic diagram of a principle of another signal-to-noise ratio SNR processing method according to an embodiment of the present invention. As shown in FIG. 7, each subcarrier group has a corresponding SNR reallocation module located in the transmit end and a corresponding SNR reallocation module located in the receive end, for example, a TX SNR reallocation module Group 1 to a TX SNR reallocation module Group K, and an RX SNR reallocation module a Group 1 to an RX SNR reallocation module Group K. In addition, in the receive end, after an input $\mathrm{SNR}_{hX}$ and an input $\mathrm{SNR}_{1x}$ of an $X^{th}$ group are processed by the SNR reallocation module in the transmit end, the communication channel, and the SNR reallocation module in the receive end, after output, an $\mathrm{SNR}_{out}$ of a channel corresponding to each subcarrier in the group is equal to $\sqrt{\mathrm{SNR}_{hx} \times \mathrm{SNR}_{lx}}$, and the $\mathrm{SNR}_{out}$ is very close to the $\mathrm{SNR}_{max}$. In other words, a quantity of bits carried on each subcarrier and transmitted on the channel is approximately equal to $\mathrm{bit}_{max}$.

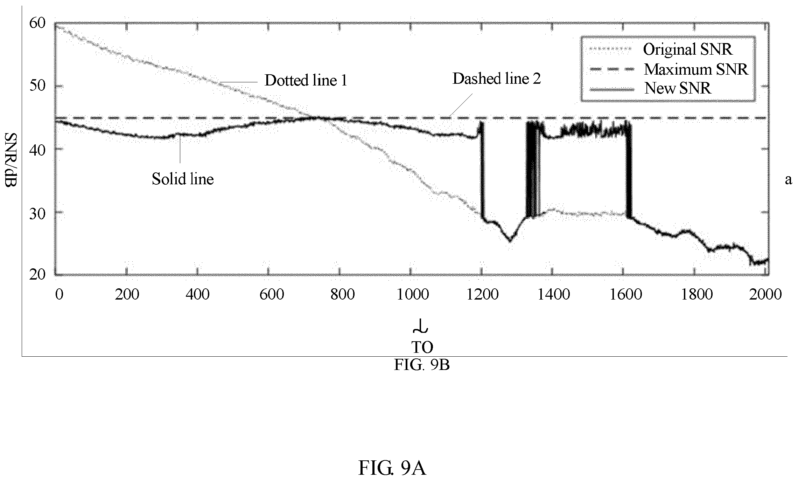

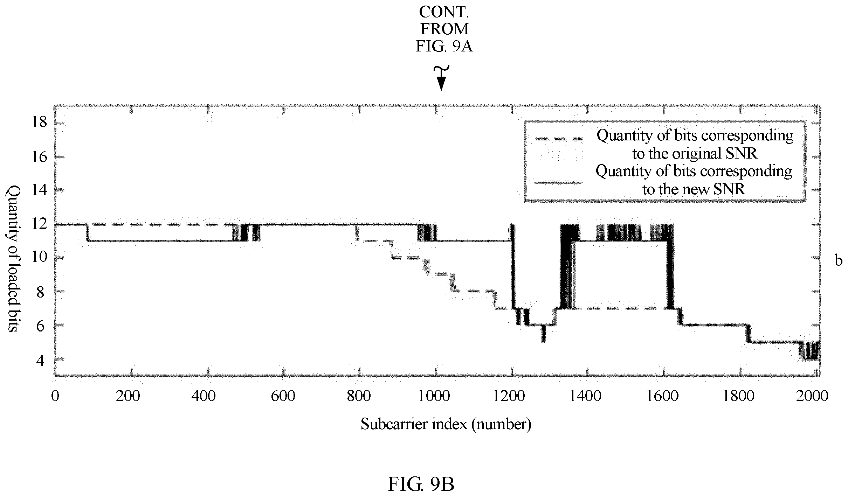

By using the grouping method in this optional implementation, comparison between a simulation result obtained after SNR reallocation and a simulation result obtained after no SNR reallocation is performed may be shown in FIG. 9A and FIG. 9B. FIG. 9A and FIG. 9B are a schematic comparison diagram of simulation results in a Gfast communications system according to an embodiment of the present invention. In FIG. 9A, SNRs (a dotted line 1, same as that in FIG. 1) originally loaded on subcarriers on a single-line channel (100 meters) in the G.fast communications system are compared with SNRs (a solid line) obtained after reallocation is performed by using the GMD algorithm. In addition, in FIG. 9A and FIG. 9B, a dashed line 2 represents the $\mathrm{SNR}_{max}$. As can be seen from FIG. 9A and FIG. 9B, some SNRs that are of the first to the 738$^{th}$ subcarriers and that exceed the $\mathrm{SNR}_{max}$ are relocated to the 739$^{th}$ to the 1200$^{th}$ subcarriers and the 1325$^{th}$ to the 1625$^{th}$ subcarriers, SNRs of the subcarriers after the relocation are close to and slightly less than the $\mathrm{SNR}_{max}$, and SNRs of the other subcarriers remain unchanged. In FIG. 9B, quantities of bits loaded in the SNRs in FIG. 9A are compared. A dashed line shows quantities of bits loaded in the original SNRs due to a limitation of $\mathrm{bit}_{max}$=12, and a total quantity of bits in all subcarriers is 18248 bits. A solid line shows quantities of bits loaded in the reallocated SNRs due to the limitation of $\mathrm{bit}_{max}$=12, and a total quantity of bits in all subcarriers is 19957 bits. Therefore, optionally, after SNRs are reallocated by using the GMD algorithm, an overall transmission rate of the system is increased by 9.37%.

In an optional implementation, the combining, by the transmit end, subcarriers in the K first subcarriers and subcarriers in the K second subcarriers, to obtain M subcarrier groups may alternatively include:
sequentially selecting, by the transmit end, A first subcarriers from the K first subcarriers and A second subcarriers from the K second subcarriers, and combining the selected A first subcarriers and corresponding A second subcarriers into one subcarrier group until the M subcarrier groups are obtained, where M = $\lfloor K/A \rfloor$, and $\lfloor \cdot \rfloor$ represents rounding down.

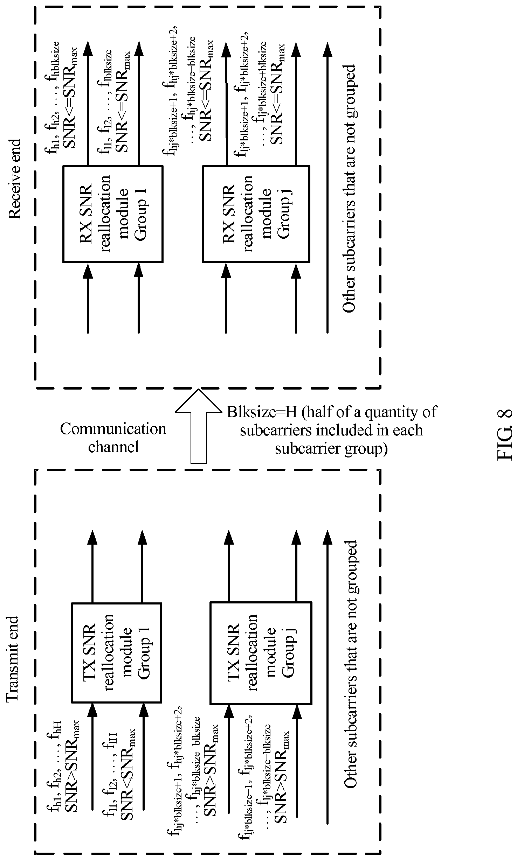

In this optional implementation, optionally, the K first subcarriers may be arranged in descending order of the SNRs of the corresponding channels, and the K second subcarriers may be arranged in ascending order of the SNRs of the corresponding channels, so that balance between SNRs can be implemented. After the M subcarrier groups are obtained, if there are still subcarriers in the K first subcarriers and the K second subcarriers, the remaining subcarrier in the K first subcarriers and the remaining subcarrier in the K second subcarriers may form one subcarrier group, and in this case, a total quantity of subcarrier groups is M+1. A schematic diagram of a principle of reallocating SNRs of channels corresponding to M or M+1 subcarrier groups may be shown in FIG. 8. FIG. 8 is a schematic diagram of a principle of another signal-to-noise ratio SNR processing method according to an embodiment of the present invention. In FIG. 8, i is equal to M or M+1, and an only difference between FIG. 8 and FIG. 7 is a subcarrier grouping manner, and same parts are not described in this optional embodiment again. It should be noted that a size of a group may vary with H, and in an actual application, the parameter H may be adjusted according to actual requirements of a scale and complexity of the communications system.

For example, it is assumed that the DSL communications system includes N subcarriers: f1, f2, ..., fN, and there are K first subcarriers whose corresponding channels have SNRs greater than the $\mathrm{SNR}_{max}$. The K first subcarriers are arranged in descending order of the SNRs of the corresponding channels as: FH=[fh1, fh2, ..., fhK], and K<N/2. K second subcarriers are selected from N-K second subcarriers whose corresponding channels have SNRs less than or equal to the $\mathrm{SNR}_{max}$, and are arranged in ascending order of the SNRs of the corresponding channels as: FL=[fl1, fl2, ..., flK]. Each of the K first subcarriers and each of the K second subcarriers are combined. These subcarriers are classified into M = $\lfloor K/A \rfloor$ groups in total.

Each subcarrier group includes A first subcarriers and A second subcarriers, $\lfloor \cdot \rfloor$ represents rounding down, and A=1 represents that each group includes two subcarriers. When A=K, it represents that the K first subcarriers and the K second subcarriers form one subcarrier group. The grouping method is: starting from the 1$^{st}$ first subcarrier of each of the FH and the FL, A subcarriers [fh(j×A)+1, fh(j×A)+2, ..., fh(j+1)×A] and [fl(j×A)+1, fl(j×A)+2, ..., fl(j+1)×A] are sequentially selected separately, and form a j$^{th}$ subcarrier group. A value of j is an integer multiple of A, and is 0, A, 2A, ..., j ≤ K, and a value range of A is 1 ≤ A ≤ K.

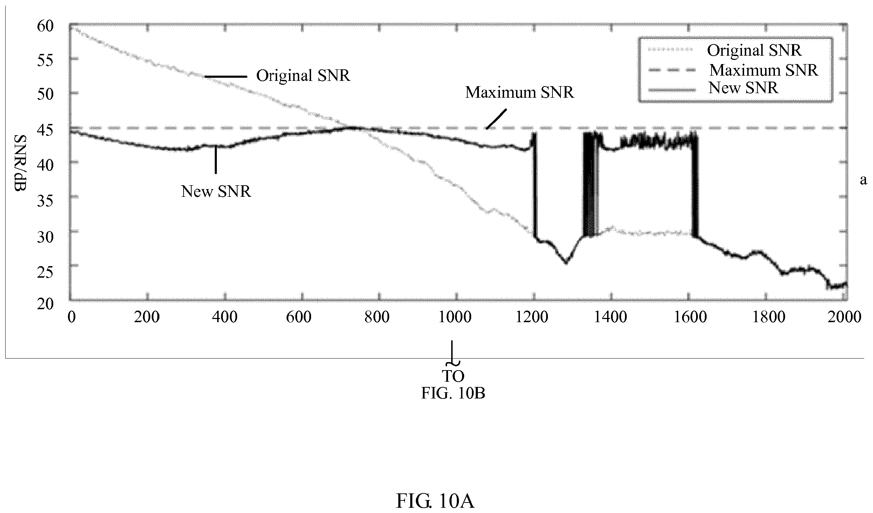

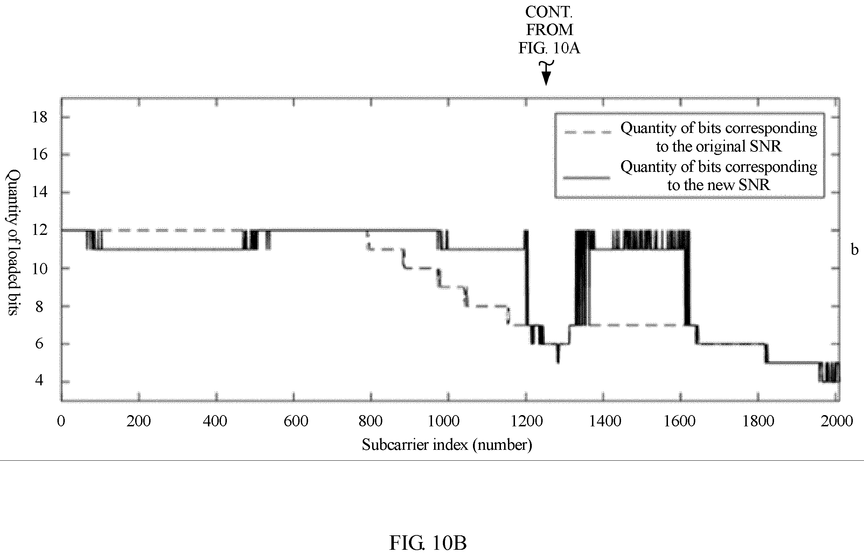

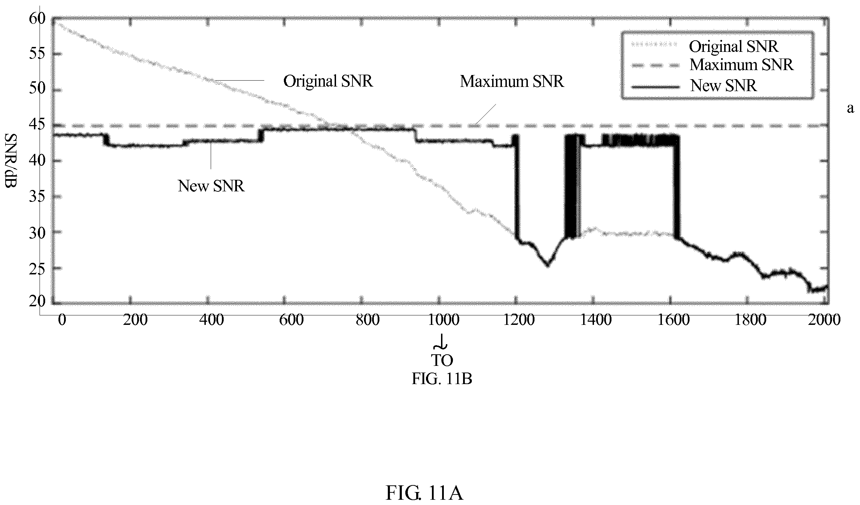

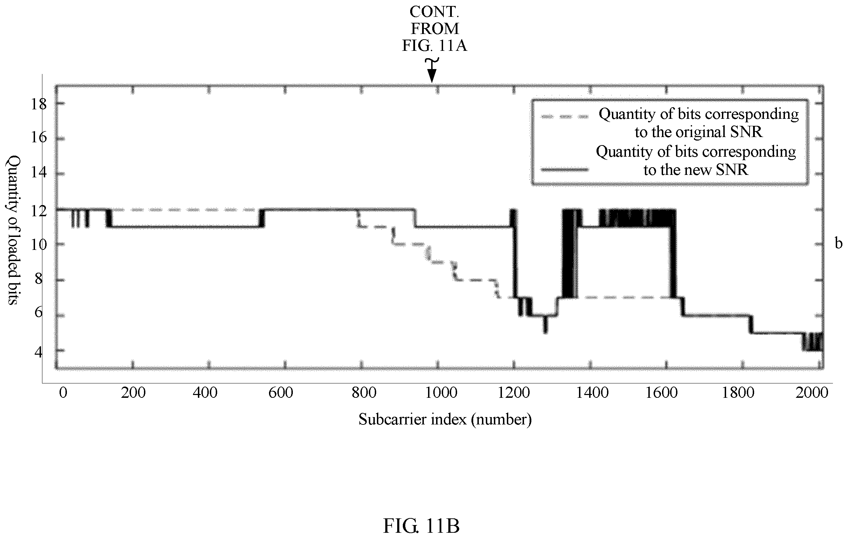

By using the grouping method in this optional implementation, comparison between a simulation result obtained after SNR reallocation and a simulation result obtained after no SNR reallocation is performed may be shown in FIG. 10A and FIG. 10B. FIG. 10A and FIG. 10B are a schematic comparison diagram of simulation results in another Gfast communications system according to an embodiment of the present invention. In FIG. 10A, SNRs (a dotted line 1, same as that in FIG. 1) originally loaded on subcarriers on a single-wire channel (100 meters) in the Gfast communications system are compared with SNRs (a solid line) obtained after reallocation is performed by using the GMD algorithm. A=1, in other words, each subcarrier group includes two subcarriers. In FIG. 10A and FIG. 10B, a dashed line 2 represents the $SNR_{max}$. FIG. 10A and FIG. 10B are compared with FIG. 9A and FIG. 9B, and a comparison result indicates that an SNR reallocation result and a bit reallocation result in FIG. 10A and FIG. 10B are very similar to those in FIG. 9A and FIG. 9B. In FIG. 10B, a dashed line represents quantities of bits loaded on original SNRs due to a limitation of $bit_{max}=12$, and a total quantity of bits loaded on all subcarriers is 18248 bits. A total quantity of bits that can be loaded when no limitation is imposed to $bit_{max}$ is 19964 bits. FIG. 10B shows quantities of bits loaded due to the limitation of $bit_{max}=12$ after the SNRs are reallocated by using the GMD decomposition algorithm, and a total quantity of bits loaded on all subcarriers is 19966 bits. As can be learned, after SNRs are reallocated by using the GMD algorithm, an overall transmission rate of the communications system is increased by 9.41%. When subcarrier grouping is changed, in other words, a value of A is increased to 200, comparison between a simulation result obtained after SNR reallocation and a simulation result obtained after no SNR reallocation is performed may be shown in FIG. 11A and FIG. 11B. FIG. 11A and FIG. 11B are a schematic comparison diagram of simulation results in still another Gfast communications system according to an embodiment of the present invention. A simulation result for SNR reallocation in FIG. 11A and FIG. 11B seems to be smoother than that in FIG. 9A and FIG. 9B and FIG. 10A and FIG. 10B. The reason is as follows: Each subcarrier group includes a relatively large quantity of subcarriers, and an output result is closer to the $SNR_{max}$ in terms of statistics. Therefore, during calculation of a quantity of loaded bits, wastes caused by rounding off may be reduced. As shown by the solid line in FIG. 11B, a total quantity of loaded bits reaches 19985 bits, and exceeds the quantity 19964 bits that can be loaded on the original SNR when no limitation is imposed to the $bit_{max}$.

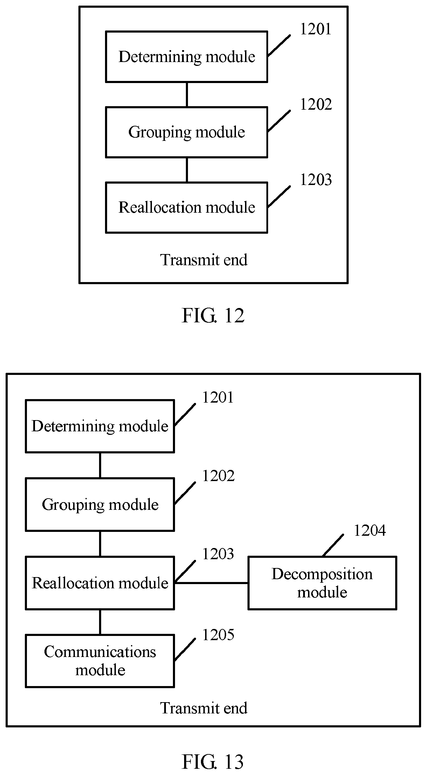

It should be noted that for a subcarrier that is not grouped, the subcarrier is processed in an existing manner. In other words, the subcarrier carrying a signal is sent to the receive end by the transmit end by using a corresponding channel, and details are not described herein. Referring to FIG. 12, FIG. 12 is a schematic structural diagram of a transmit end according to an embodiment of the present invention. As shown in FIG. 12, the transmit end may include a determining module 1201, a grouping module 1202, and a reallocation module 1203.

The determining module 1201 is configured to determine N subcarriers obtained by dividing a bandwidth occupied by a communication channel, where the N subcarriers include K first subcarriers and N-K second subcarriers, an SNR of a channel corresponding to each of the K first subcarriers is greater than a maximum signal-to-noise ratio $SNR_{max}$, an SNR of a channel corresponding to each of the N-K second subcarriers is less than or equal to the $SNR_{max}$, and 0<K<N/2.

The grouping module 1202 is configured to: select K second subcarriers from the N-K second subcarriers, and combine subcarriers in the K first subcarriers and subcarriers in the K second subcarriers, to obtain M subcarrier groups, where 0<M≤K.

The reallocation module 1203 is configured to: perform reallocation and precoding processing on L subcarriers in any subcarrier group, and send the L subcarriers obtained after the reallocation and precoding processing to a receive end, to trigger the receive end to convert the L subcarriers obtained after the reallocation and precoding processing into L third subcarriers, where L is a quantity of subcarriers in each subcarrier group, and each of SNRs of channels corresponding to third subcarriers obtained after conversion is performed for each subcarrier group is equal to a product of SNRs of channels corresponding to all subcarriers in the subcarrier group raised to the power of 1/L.

In an optional embodiment, the transmit end may further include a decomposition module 1204 and a communications module 1205. In this case, a structure of the transmit end may be shown in FIG. 13. FIG. 13 is a schematic structural diagram of another transmit end according to an embodiment of the present invention.

The decomposition module 1204 is configured to perform the following decomposition on the channels corresponding to the subcarriers in each subcarrier group by using a geometric mean decomposition GMD algorithm:

$$\mathbf{H} = \mathbf{QRP}^{*}$$

where the matrix H is a matrix of the channels corresponding to the subcarriers in each subcarrier group, the matrix Q and the matrix P are unitary matrices, the matrix R is an upper triangular matrix or a lower triangular matrix, and diagonal elements of the matrix R are equal to a geometric mean of singular values of the matrix H.

The communications module 1205 is configured to send, to the receive end, the matrix Q obtained after the matrix H of the channels corresponding to the subcarriers in each subcarrier group is decomposed.

In this optional embodiment, a specific manner in which the reallocation module 1203 performs the reallocation and precoding processing on the L subcarriers in any subcarrier group, and sends the L subcarriers obtained after the reallocation and precoding processing to the receive end, to trigger the receive end to convert the L subcarriers obtained after the reallocation and precoding processing into the L third subcarriers may be:

performing the reallocation and precoding processing for any subcarrier group by using the matrix P that is in the transmit end and that is obtained after the matrix H of the channels corresponding to the subcarriers in the subcarrier group is decomposed, and sending the subcarrier group obtained after the reallocation and precoding processing to a conjugate transpose matrix $Q^*$ of the matrix Q that is in the receive end and that is obtained after the matrix H of the channels corresponding to the subcarriers in the subcarrier group is decomposed, to perform reallocation signal cancellation, to perform conversion for each subcarrier group to obtain the L third subcarriers.

Optionally, a specific manner in which the grouping module 1202 selects the K second subcarriers from the N-K second subcarriers may be:

selecting, from the N-K second subcarriers, K second subcarriers whose corresponding channels have a maximum SNR.

In an optional implementation, a specific manner in which the grouping module 1202 combines the subcarriers in the K first subcarriers and the subcarriers in the K second subcarriers, to obtain the M subcarrier groups may be:

sequentially determining, from the K second subcarriers, different target second subcarriers for different first subcarriers in the K first subcarriers; and

determining, as one subcarrier group, each of the K first subcarriers and a target second subcarrier determined for the first subcarrier, to obtain the M subcarrier groups, where M is equal to K, where

an $SNR_{X2}$ of a channel corresponding to a target second subcarrier determined for an $X^{th}$ first subcarrier in the K first subcarriers satisfies the following condition:

$$\left| \frac{(SNR_{max})^2}{SNR_{X1}} - SNR_{X2} \right| < \left| SNR_{Y2} - \frac{(SNR_{max})^2}{SNR_{X1}} \right|,$$

where the $SNR_{xi}$ is an SNR of a channel corresponding to the $X^{th}$ first subcarrier, the $SNR_{Y2}$ is an SNR of a channel corresponding any second subcarrier in the K second subcarriers other than target second subcarriers determined for the first X-1 first subcarriers in the K first subcarriers, and $1 \leq X \leq K$.

In another optional implementation, a specific manner in which the grouping module 1202 combines the subcarriers in the K first subcarriers and the subcarriers in the K second subcarriers, to obtain the M subcarrier groups may alternatively be:

sequentially selecting A first subcarriers from the K first subcarriers and A second subcarriers from the K second subcarriers, and combining the selected A first subcarriers and corresponding A second subcarriers into one subcarrier group until the M subcarrier groups are obtained, where $M = \lfloor K/A \rfloor$.

As can be learned, in this embodiment of the present invention, a subcarrier whose corresponding channel has a relatively high SNR and a subcarrier whose corresponding channel has a relatively low SNR are combined into one subcarrier group, and subcarriers in each subcarrier group are converted into subcarriers whose corresponding channels have a same SNR, and a quantity of the subcarriers obtained after the conversion is the same as a quantity of the subcarriers included in the subcarrier group. Therefore, some SNRs are relocated from subcarriers having relatively high SNRs to subcarriers having relatively low SNRs, an SNR waste in a communications system is reduced, SNR utilization is improved, and further a transmission capacity of the communications system is increased.

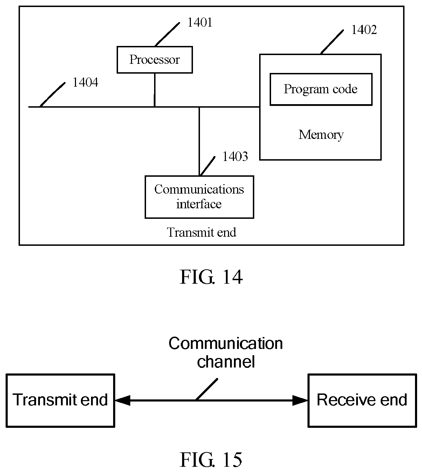

Referring to FIG. 14, FIG. 14 is a schematic structural diagram of another transmit end according to an embodiment of the present invention. As shown in FIG. 14, the transmit end may include a processor 1401, a memory 1402, a communications interface 1403, and at least one communications bus 1404. The memory 1402 may be a high-speed RAM memory, or may be a non-volatile memory (non-volatile memory), for example, at least one magnetic memory. Optionally, the memory 1402 may alternatively be at least one storage apparatus located away from the foregoing processor 1401.

The communications bus 1404 is configured to implement connection between the components.

The memory 1402 stores a group of program code, and the processor 1401 is configured to invoke the program code stored in the memory 1402, to perform the following operations:

determining N subcarriers obtained by dividing a bandwidth occupied by a communication channel, where the N subcarriers include K first subcarriers and N-K second subcarriers, an SNR of a channel corresponding to each of the K first subcarriers is greater than a maximum signal-to-noise ratio $SNR_{max}$, an SNR of a channel corresponding to each of the N-K second subcarriers is less than or equal to the $SNR_{max}$, and $0 < K < N/2$;

selecting K second subcarriers from the N-K second subcarriers;

combining subcarriers in the K first subcarriers and subcarriers in the K second subcarriers, to obtain M subcarrier groups, where $0<M\leq K$; and

performing reallocation and precoding processing on L subcarriers in any subcarrier group, and sending the L subcarriers obtained after the reallocation and precoding processing to a receive end by using the communications interface 1403, to trigger the receive end to convert the L subcarriers obtained after the reallocation and precoding processing into L third subcarriers, where L is a quantity of subcarriers in each subcarrier group, and each of SNRs of channels corresponding to third subcarriers obtained after conversion is performed for each subcarrier group is equal to a product of SNRs of channels corresponding to all subcarriers in the subcarrier group raised to the power of 1/L.

In an optional embodiment, the processor 1401 is configured to invoke the program code stored in the memory 1402, to further perform the following operations:

decomposing the channels corresponding to the subcarriers in each subcarrier group into the following by using a geometric mean decomposition GMD algorithm:

$$\mathbf{H} = \mathbf{QRP}^*$$

where the matrix H is a matrix of the channels corresponding to the subcarriers in each subcarrier group, the matrix Q and the matrix P are unitary matrices, the matrix R is an upper triangular matrix or a lower triangular matrix, and diagonal elements of the matrix R are equal to a geometric mean of singular values of the matrix H; and

sending, to the receive end by using the communications interface 1403, the matrix Q obtained after the matrix H of the channels corresponding to the subcarriers in each subcarrier group is decomposed.

A specific manner in which the processor 1401 performs the reallocation and precoding processing on the L subcarriers in any subcarrier group, and sends the L subcarriers obtained after the reallocation and precoding processing to the receive end by using the communications interface 1403, to trigger the receive end to convert the L subcarriers obtained after the reallocation and precoding processing into the L third subcarriers may be:

performing the reallocation and precoding processing for any subcarrier group by using the matrix P that is in the transmit end and that is obtained after the matrix H of the channels corresponding to the subcarriers in the subcarrier group is decomposed, and sending, by using the channels corresponding to the subcarriers in the subcarrier group, the subcarrier group obtained after the reallocation and precoding processing to a conjugate transpose matrix $\mathrm{Q}^*$ of the matrix Q that is in the receive end and that is obtained after the matrix H of the channels corresponding to the subcarriers in the subcarrier group is decomposed, to perform reallocation signal cancellation, to perform conversion for each subcarrier group to obtain the L third subcarriers.

Optionally, a specific manner in which the processor 1401 selects the K second subcarriers from the N-K second subcarriers may be:

selecting, from the N-K second subcarriers, K second subcarriers whose corresponding channels have a maximum SNR.

In an optional implementation, a specific manner in which the processor 1401 combines the subcarriers in the K first subcarriers and the subcarriers in the K second subcarriers, to obtain the M subcarrier groups may be:

sequentially determining, from the K second subcarriers, different target second subcarriers for different first subcarriers in the K first subcarriers; and

determining, as one subcarrier group, each of the K first subcarriers and a target second subcarrier determined for the first subcarrier, to obtain the M subcarrier groups, where M is equal to K, where

an $\mathrm{SNR}_{X2}$ of a channel corresponding to a target second subcarrier determined for an $X^{th}$ first subcarrier in the K first subcarriers satisfies the following condition:

$$\left| \frac{(\mathbf{SNR}_{max})^2}{\mathbf{SNR}_{X1}} - \mathbf{SNR}_{X2} \right| < \left| \mathbf{SNR}_{Y2} - \frac{(\mathbf{SNR}_{max})^2}{\mathbf{SNR}_{X1}} \right|,$$

where the SNRxi is an SNR of a channel corresponding to the $X^{th}$ first subcarrier, the $\mathrm{SNR}_{Y2}$ is an SNR of a channel corresponding any second subcarrier in the K second subcarriers other than target second subcarriers determined for the first X-1 first subcarriers in the K first subcarriers, and $1\leq X\leq K$.

In another optional implementation, a specific manner in which the processor 1401 combines the subcarriers in the K first subcarriers and the subcarriers in the K second subcarriers, to obtain the M subcarrier groups may alternatively be:

sequentially selecting A first subcarriers from the K first subcarriers and A second subcarriers from the K second subcarriers, and combining the selected A first subcarriers and corresponding A second subcarriers into one subcarrier group until the M subcarrier groups are obtained, where $M = \lfloor K/A \rfloor$.

As can be learned, in this embodiment of the present invention, a subcarrier whose corresponding channel has a relatively high SNR and a subcarrier whose corresponding channel has a relatively low SNR are combined into one subcarrier group, and subcarriers in each subcarrier group are converted into subcarriers whose corresponding channels have a same SNR, and a quantity of the subcarriers obtained after the conversion is the same as a quantity of the subcarriers included in the subcarrier group. Therefore, some SNRs are relocated from subcarriers having relatively high SNRs to subcarriers having relatively low SNRs, an SNR waste in a communications system is reduced, SNR utilization is improved, and further a transmission capacity of the communications system is increased.

Referring to FIG. 15, FIG. 15 is a schematic structural diagram of a signal-to-noise ratio SNR processing system according to an embodiment of the present invention. As shown in FIG. 15, the system may include a transmit end and a receive end.

The transmit end is configured to determine N subcarriers obtained by dividing a bandwidth occupied by a communication channel, where the N subcarriers include K first subcarriers and N-K second subcarriers, an SNR of a channel corresponding to each of the K first subcarriers is greater than a maximum signal-to-noise ratio $SNR_{max}$, an SNR of a channel corresponding to each of the N-K second subcarriers is less than or equal to the $SNR_{max}$, and 0<K<N/2.

The transmit end is further configured to: select K second subcarriers from the N-K second subcarriers, and combine subcarriers in the K first subcarriers and subcarriers in the K second subcarriers, to obtain M subcarrier groups, where 0<M≤K.

The transmit end is further configured to: perform reallocation and precoding processing on L subcarriers in any subcarrier group, and send the L subcarriers obtained after the reallocation and precoding processing to the receive end, where L is a quantity of subcarriers in each subcarrier group.

The receive end is configured to convert the L subcarriers in any subcarrier group that are obtained after the reallocation and precoding processing into L third subcarriers, where each of SNRs of channels corresponding to third subcarriers obtained after conversion is performed for each subcarrier group is equal to a product of SNRs of channels corresponding to all subcarriers in the subcarrier group raised to the power of 1/L.

In an optional embodiment, the transmit end may be further configured to: before performing the reallocation and precoding processing on the L subcarriers in any subcarrier group, and sending the L subcarriers obtained after the reallocation and precoding processing to the receive end, perform the following decomposition on the channels corresponding to the subcarriers in each subcarrier group by using a geometric mean decomposition GMD algorithm:

$$\mathbf{H} = \mathbf{QRP}^{*}$$

where the matrix H is a matrix of the channels corresponding to the subcarriers in each subcarrier group, the matrix Q and the matrix P are unitary matrices, the matrix R is an upper triangular matrix or a lower triangular matrix, and diagonal elements of the matrix R are equal to a geometric mean of singular values of the matrix H.

The transmit end may be further configured to send, to the receive end, the matrix Q obtained after the matrix H of the channels corresponding to the subcarriers in each subcarrier group is decomposed.

A specific manner in which the transmit end performs the reallocation and precoding processing on the L subcarriers in any subcarrier group, and sends the L subcarriers obtained after the reallocation and precoding processing to the receive end may be:

performing the reallocation and precoding processing for any subcarrier group by using the matrix P that is in the transmit end and that is obtained after the matrix H of channels corresponding to subcarriers in the subcarrier group is decomposed, and sending the subcarrier group obtained after the reallocation and precoding processing to the receive end.

A specific manner in which the receive end converts the L subcarriers in any subcarrier group that are obtained after the reallocation and precoding processing into the L third subcarriers may be:

processing the L subcarriers in any subcarrier group that are obtained after the reallocation and precoding processing, by using a conjugate transpose matrix $Q^{*}$ of the matrix Q that is in the receive end and that is obtained after the matrix H of the channels corresponding to the subcarriers in the subcarrier group is decomposed, to perform conversion for each subcarrier group to obtain the L third subcarriers.

Optionally, a specific manner in which the transmit end selects the K second subcarriers from the N-K second subcarriers is:

selecting, from the N-K second subcarriers, K second subcarriers whose corresponding channels have a maximum SNR.

In an optional implementation, a specific manner in which the transmit end combines the subcarriers in the K first subcarriers and the subcarriers in the K second subcarriers, to obtain the M subcarrier groups may be:

sequentially determining, from the K second subcarriers, different target second subcarriers for different first subcarriers in the K first subcarriers; and

determining, as one subcarrier group, each of the K first subcarriers and a target second subcarrier determined for the first subcarrier, to obtain the M subcarrier groups, where M is equal to K, where

an $SNR_{X2}$ of a channel corresponding to a target second subcarrier determined for an $X^{th}$ first subcarrier in the K first subcarriers satisfies the following condition:

$$\left| \frac{(SNR_{max})^2}{SNR_{X1}} - SNR_{X2} \right| < \left| SNR_{Y2} - \frac{(SNR_{max})^2}{SNR_{X1}} \right| ,$$

where the $SNR_{xi}$ is an SNR of a channel corresponding to the $X^{th}$ first subcarrier, the $SNR_{Y2}$ is an SNR of a channel corresponding any second subcarrier in the K second subcarriers other than target second subcarriers determined for the first X-1 first subcarriers in the K first subcarriers, and $1 \le X \le K$.

In another optional implementation, a specific manner in which the transmit end combines the subcarriers in the K first subcarriers and the subcarriers in the K second subcarriers, to obtain the M subcarrier groups may alternatively be:

sequentially selecting A first subcarriers from the K first subcarriers and A second subcarriers from the K second subcarriers, and combining the selected A first subcarriers and corresponding A second subcarriers into one subcarrier group until the M subcarrier groups are obtained, where $M = \lfloor K/A \rfloor$.

As can be learned, in this embodiment of the present invention, a subcarrier whose corresponding channel has a relatively high SNR and a subcarrier whose corresponding channel has a relatively low SNR are combined into one subcarrier group, and subcarriers in each subcarrier group are converted into subcarriers whose corresponding channels have a same SNR, and a quantity of the subcarriers obtained after the conversion is the same as a quantity of the subcarriers included in the subcarrier group. Therefore, some SNRs are relocated from subcarriers having relatively high SNRs to subcarriers having relatively low SNRs, an SNR waste in a communications system is reduced, SNR utilization is improved, and further a transmission capacity of the communications system is increased.

It should be noted that, in the foregoing embodiments, the description of each embodiment has respective focuses. For a part that is not described in detail in an embodiment, refer to related descriptions in other embodiments. In addition, a person skilled in the art should also appreciate that all the embodiments described in this specification are example embodiments, and the related actions and modules are not necessarily mandatory to the present invention. A sequence of the steps of the method in the embodiments of the present invention may be adjusted, and certain steps may also be combined or removed according to an actual requirement.

The modules in the transmit end in the embodiments of the present invention may be combined, divided, or deleted according to an actual requirement.

The modules of the embodiments of the present invention may be executed by a universal integrated circuit, such as a CPU (central processing unit) or an ASIC (application specific integrated circuit).

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM), or a random access memory (RAM).

In short, the foregoing descriptions are merely example embodiments of the present invention, but are not intended to limit the protection scope of the present invention.

**Claims**

1. A signal-to-noise ratio, SNR, processing method, wherein the method comprises:

determining, by a transmit end, N subcarriers obtained by dividing a bandwidth occupied by a communication channel, wherein the N subcarriers comprise K first subcarriers and N-K second subcarriers, an SNR of a channel corresponding to each of the K first subcarriers is greater than a maximum signal-to-noise ratio $SNR_{max}$,

an SNR of a channel corresponding to each of the N-K second subcarriers is less than or equal to the $\mathrm{SNR_{max}}$, and 0<K<N/2, and the quantity $b_i$ of bits loaded on each subcarrier is:

$$b_i = \min(\,\mathrm{round}(\,\log_2(\,1 + \mathrm{SNR}_i\,)\,)\,,\ \mathrm{bit_{max}}\,),$$

wherein $\mathrm{bit_{max}}$ represents a maximum quantity of bits allowed to be loaded in the communications system;
selecting, by the transmit end, K second subcarriers from the N-K second subcarriers;
combining, by the transmit end, subcarriers in the K first subcarriers and subcarriers in the K second subcarriers, to obtain M subcarrier groups, wherein 0<M≤K;
performing, by the transmit end, the following decomposition on the channels corresponding to the subcarriers in each subcarrier group by using a geometric mean decomposition, GMD, algorithm:

$$H = Q\ R\ P^*,$$

wherein the matrix H is a matrix of the channels corresponding to the subcarriers in each subcarrier group, the matrix Q and the matrix P are unitary matrices, the matrix R is an upper triangular matrix or a lower triangular matrix, and diagonal elements of the matrix R are equal to a geometric mean of singular values of the matrix H; and
sending, by the transmit end to the receive end, the matrix Q obtained after the matrix H of the channels corresponding to the subcarriers in each subcarrier group is decomposed; and
the performing, by the transmit end, reallocation and precoding processing on L subcarriers in any subcarrier group, and sending the L subcarriers obtained after the reallocation and precoding processing to a receive end, to trigger the receive end to convert the L subcarriers obtained after the reallocation and precoding processing into L third subcarriers comprises:
performing, by the transmit end, the reallocation and precoding processing for any subcarrier group by using the matrix P that is in the transmit end and that is obtained after the matrix H of the channels corresponding to the subcarriers in the subcarrier group is decomposed, and sending the subcarrier group obtained after the reallocation and precoding processing to a conjugate transpose matrix $Q^*$ of the matrix Q that is in the receive end and that is obtained after the matrix H of the channels corresponding to the subcarriers in the subcarrier group is decomposed, to perform conversion for each subcarrier group to obtain the L third subcarriers; and

performing, by the transmit end, reallocation and precoding processing on L subcarriers in any subcarrier group, and sending the L subcarriers obtained after the reallocation and precoding processing to a receive end, to trigger the receive end to convert the L subcarriers obtained after the reallocation and precoding processing into L third subcarriers, wherein L is a quantity of subcarriers in each subcarrier group, and each of SNRs of channels corresponding to third subcarriers obtained after conversion is performed for each subcarrier group is equal to a product of SNRs of channels corresponding to all subcarriers in the subcarrier group raised to the power of 1/L;
**characterized in that** the combining comprises:

sequentially determining, by the transmit end, from the K second subcarriers, different target second subcarriers for different first subcarriers in the K first subcarriers; and
determining, by the transmit end as one subcarrier group, each of the K first subcarriers and a target second subcarrier determined for the first subcarrier, to obtain the M subcarrier groups, wherein M is equal to K, wherein
an $\mathrm{SNR_{X2}}$ of a channel corresponding to a target second subcarrier determined for an Xth first subcarrier in the K first subcarriers satisfies the following condition:

$$\left| \frac{(\mathrm{SNR_{max}})^2}{\mathrm{SNR_{X1}}} - \mathrm{SNR_{X2}} \right| < \left| \mathrm{SNR_{Y2}} - \frac{(\mathrm{SNR_{max}})^2}{\mathrm{SNR_{X1}}} \right|,$$

wherein the $\mathrm{SNR_{xi}}$ is an SNR of a channel corresponding to the Xth first subcarrier, the $\mathrm{SNR_{Y1}}$ is an SNR of a channel corresponding any second subcarrier in the K second subcarriers other than target second subcarriers determined for the first X-1 first subcarriers in the K first subcarriers, and $1 \leq X \leq K$.

2. The method according to claim 1, wherein the selecting, by the transmit end, K second subcarriers from the N-K second subcarriers comprises:

   selecting, by the transmit end from the N-K second subcarriers, K second subcarriers whose corresponding channels have a maximum SNR

3. The method according to claim 1 or 2, wherein the combining, by the transmit end, subcarriers in the K first subcarriers and subcarriers in the K second subcarriers, to obtain M subcarrier groups comprises:

   sequentially selecting, by the transmit end, A first subcarriers from the K first subcarriers and A second subcarriers from the K second subcarriers, and combining the selected A first subcarriers and corresponding A second subcarriers into one subcarrier group until the M subcarrier groups are obtained, wherein M = $\lfloor K/A \rfloor$.

4. A transmit end, wherein the transmit end comprises a determining module (1201), a grouping module (1202), and a reallocation module (1203), wherein

   the determining module (1201) is configured to determine N subcarriers obtained by dividing a bandwidth occupied by a communication channel, wherein the N subcarriers comprise K first subcarriers and N-K second subcarriers, an SNR of a channel corresponding to each of the K first subcarriers is greater than a maximum signal-to-noise ratio $SNR_{max}$, an SNR of a channel corresponding to each of the N-K second subcarriers is less than or equal to the $SNR_{max}$, and $0 < K < N/2$, and the quantity $b_i$ of bits loaded on each subcarrier is:

$$b_i = \min(\text{round}(\log_2(1 + SNR_i)), bit_{max}),$$

   wherein $bit_{max}$ represents a maximum quantity of bits allowed to be loaded in the communications system; the grouping module (1202) is configured to: select K second subcarriers from the N-K second subcarriers, and combine subcarriers in the K first subcarriers and subcarriers in the K second subcarriers, to obtain M subcarrier groups, wherein $0 < M \leq K$; and

   a decomposition module (1204) and a communications module (1205), wherein the decomposition module (1204) is configured to perform the following decomposition on the channels corresponding to the subcarriers in each subcarrier group by using a geometric mean decomposition GMD algorithm:

$$H = Q R P^*,$$

   wherein the matrix H is a matrix of the channels corresponding to the subcarriers in each subcarrier group, the matrix Q and the matrix P are unitary matrices, the matrix R is an upper triangular matrix or a lower triangular matrix, and diagonal elements of the matrix R are equal to a geometric mean of singular values of the matrix H;
   the communications module (1205) is configured to send, to the receive end, the matrix Q obtained after the matrix H of the channels corresponding to the subcarriers in each subcarrier group is decomposed; and

   the reallocation module (1203) is configured to: perform reallocation and precoding processing on L subcarriers in any subcarrier group, and send the L subcarriers obtained after the reallocation and precoding processing to a receive end, to trigger the receive end to convert the L subcarriers obtained after the reallocation and precoding processing into L third subcarriers, wherein L is a quantity of subcarriers in each subcarrier group, and each of SNRs of channels corresponding to third subcarriers obtained after conversion is performed for each subcarrier group is equal to a product of SNRs of channels corresponding to all subcarriers in the subcarrier group raised to the power of 1/L,
   wherein a specific manner in which the reallocation module (1203) performs the reallocation and precoding processing on the L subcarriers in any subcarrier group, and sends the L subcarriers obtained after the reallocation and precoding processing to the receive end, to trigger the receive end to convert the L subcarriers obtained after the reallocation and precoding processing into the L third subcarriers is:
   performing the reallocation and precoding processing for any subcarrier group by using the matrix P that is in the transmit end and that is obtained after the matrix H of the channels corresponding to the subcarriers in the subcarrier group is decomposed, and sending the subcarrier group obtained after the reallocation and precoding processing to a conjugate transpose matrix Q* of the matrix Q that is in the receive end and that is obtained after the matrix H of the channels corresponding to the subcarriers in the subcarrier group is decomposed, to perform conversion for each subcarrier group to obtain the L third subcarriers,

**characterized in that** a specific manner in which the grouping module (1202) combines the subcarriers in the K first subcarriers and the subcarriers in the K second subcarriers, to obtain the M subcarrier groups is:

sequentially determining, from the K second subcarriers, different target second subcarriers for different first subcarriers in the K first subcarriers; and determining, as one subcarrier group, each of the K first subcarriers and a target second subcarrier determined for the first subcarrier, to obtain the M subcarrier groups, wherein M is equal to K, wherein

an $SNR_{X2}$ of a channel corresponding to a target second subcarrier determined for an $X^{th}$ first subcarrier in the K first subcarriers satisfies the following condition:

$$\left| \frac{(SNR_{max})^2}{SNR_{X1}} - SNR_{X2} \right| < \left| SNR_{Y2} - \frac{(SNR_{max})^2}{SNR_{X1}} \right|,$$

wherein the SNRxi is an SNR of a channel corresponding to the $X^{th}$ first subcarrier, the $SNR_{Y2}$ is an SNR of a channel corresponding any second subcarrier in the K second subcarriers other than target second subcarriers determined for the first X-1 first subcarriers in the K first subcarriers, and $1 \leq X \leq K$.

5. The transmit end according to claim 4, wherein a specific manner in which the grouping module (1202) selects the K second subcarriers from the N-K second subcarriers is:
selecting, from the N-K second subcarriers, K second subcarriers whose corresponding channels have a maximum SNR

6. The transmit end according to any one of claims 4 or 5, wherein a specific manner in which the grouping module (1202) combines the subcarriers in the K first subcarriers and the subcarriers in the K second subcarriers, to obtain the M subcarrier groups is:
sequentially selecting A first subcarriers from the K first subcarriers and A second subcarriers from the K second subcarriers, and combining the selected A first subcarriers and corresponding A second subcarriers into one subcarrier group until the M subcarrier groups are obtained, wherein M = $\lfloor K/A \rfloor$.

7. A signal-to-noise ratio, SNR, processing system, wherein the system comprises a transmit end according to any one of claims 4 to 6 and a receive end.

**Patentansprüche**

1. Verarbeitungsverfahren für ein Signal-Rausch-Verhältnis (SRV), wobei das Verfahren Folgendes umfasst:

Bestimmen, durch eine Sendeseite, von N Hilfsträgern, die durch Teilen einer Bandbreite erhalten werden, die durch einen Kommunikationskanal belegt ist, wobei die N Hilfsträger K erste Hilfsträger und N-K zweite Hilfsträger umfassen, ein SRV eines Kanals, der jedem der K ersten Hilfsträger entspricht, größer als ein maximales Signal-Rausch-Verhältnis $SRV_{max}$ ist, ein SRV eines Kanals, der jedem der N-K zweiten Hilfsträger entspricht, kleiner oder gleich dem $SRV_{max}$ ist und 0 < K < N/2 und die Menge $b_i$ von Bits, die auf jedem Hilfsträger geladen sind, Folgendes ist:

$$b_i = \min(\text{round}(\log_2(1 + SRV_i)), bit_{max}),$$

wobei $bit_{max}$ eine maximale Anzahl von Bits darstellt, denen es erlaubt ist, in das Kommunikationssystem geladen zu werden;
Auswählen, durch die Sendeseite, von K zweiten Hilfsträgern aus den N-K zweiten Hilfsträgern;
Kombinieren, durch die Sendeseite, von Hilfsträgern in den K ersten Hilfsträgern und Hilfsträgern in den K zweiten Hilfsträgern, um M Hilfsträgergruppen zu erhalten, wobei 0 < M ≤ K;

Durchführen, durch die Sendeseite, der folgenden Auflösung auf den Kanälen, die den Hilfsträgern in jeder Hilfsträgergruppe entsprechen, durch Verwenden eines Algorithmus einer geometrischen Mittelwert-Zerlegung (*geometric mean decomposition* - GMD):

$H = Q R P^*$, wobei die Matrix H eine Matrix der Kanäle ist, die den Hilfsträgern in jeder Hilfsträgergruppe entsprechen, die Matrix Q und die Matrix P unitäre Matrizen sind, die Matrix R eine obere Dreiecksmatrix oder eine untere Dreiecksmatrix ist und diagonale Elemente der Matrix R gleich einem geometrischen Mittelwert von Singularwerten der Matrix H sind; und

Senden, durch die Sendeseite an die Empfangsseite, der Matrix Q, die erhalten wird, nachdem die Matrix H der Kanäle, die den Hilfsträgern in jeder Hilfsträgergruppe entsprechen, zerlegt wird; und

das Durchführen, durch die Sendeseite, eines Neuzuweisungs- und Vorcodierungsverarbeitens auf L Hilfsträgern in einer beliebigen Hilfsträgergruppe und das Senden der L Hilfsträger, die nach dem Neuzuweisungs- und Vorcodierungsverarbeiten erhalten werden, an eine Empfangsseite, um die Empfangsseite auszulösen, um die L Hilfsträger, die nach dem Neuzuweisungs- und Vorcodierungsverarbeiten erhalten werden, in L dritte Hilfsträger zu konvertieren, Folgendes umfasst:

Durchführen, durch die Sendeseite, des Neuzuweisungs- und Vorcodierungsverarbeitens für eine beliebige Hilfsträgergruppe durch Verwenden der Matrix P, die sich in der Sendeseite befindet und die erhalten wird, nachdem die Matrix H der Kanäle, die den Hilfsträgern in der Hilfsträgergruppe entsprechen, zerlegt wird, und Senden der Hilfsträgergruppe, die nach dem Neuzuweisungs- und Vorcodierungsverarbeiten erhalten werden, an eine transponiert-konjugierte Matrix $Q^*$ der Matrix Q, die sich in der Empfangsseite befindet und die erhalten wird, nachdem die Matrix H der Kanäle, die den Hilfsträgern in der Hilfsträgergruppe entsprechen, zerlegt wird, um eine Konvertierung für jede Hilfsträgergruppe durchzuführen, um die L dritten Hilfsträger zu erhalten; und

Durchführen, durch die Sendeseite, eines Neuzuweisungs- und Vorcodierungsverarbeitens auf L Hilfsträgern in einer beliebigen Hilfsträgergruppe und Senden der L Hilfsträger, die nach dem Neuzuweisungs- und Vorcodierungsverarbeiten erhalten werden, an eine Empfangsseite, um die Empfangsseite auszulösen, um die L Hilfsträger, die nach dem Neuzuweisungs- und Vorcodierungsverarbeiten erhalten werden, in L dritte Hilfsträger zu konvertieren, wobei L eine Menge von Hilfsträgern in jeder Hilfsträgergruppe ist, und jedes von SRVs von Kanälen, die dritten Hilfsträgern entsprechen, die erhalten werden, nachdem die Konvertierung für jede Hilfsträgergruppe durchgeführt wird, gleich einem Produkt von SRVs von Kanälen, die allen Hilfsträgern in der Hilfsträgergruppe entsprechen, hoch 1/L ist; **dadurch gekennzeichnet, dass** das Kombinieren Folgendes umfasst:

fortlaufendes Bestimmen, durch die Sendeseite, aus den K zweiten Hilfsträgern, unterschiedlicher zweiter Zielhilfsträger für unterschiedliche erste Hilfsträger in den K ersten Hilfsträgern; und Bestimmen, durch die Sendeseite als eine Hilfsträgergruppe, jeder der K ersten Hilfsträger und eines zweiten Zielhilfsträgers, der für den ersten Hilfsträger bestimmt wird, um die M Hilfsträgergruppen zu erhalten, wobei M gleich K ist, wobei ein $SRV_{X2}$ eines Kanals, der einem zweiten Zielhilfsträger entspricht, der für einen X-ten ersten Hilfsträger in den K ersten Hilfsträgern bestimmt wird, die folgende Bedingung erfüllt:

$$\left| \frac{(SRV_{max})^2}{SRV_{X1}} - SRV_{X2} \right| < \left| SRV_{Y2} - \frac{(SRV_{max})^2}{SRV_{X1}} \right|,$$

wobei das $SRV_{X1}$ ein SRV eines Kanals ist, der dem X-ten ersten Hilfsträger entspricht, das $SRV_{Y2}$ ein SRV eines Kanals ist, der einem beliebigen anderen zweiten Hilfsträger in den K zweiten Hilfsträgern als den zweiten Zielhilfsträgern entspricht, die für die ersten X-1 ersten Hilfsträger in den K ersten Hilfsträger bestimmt werden, und $1 \leq X \leq K$.

2. Verfahren nach Anspruch 1, wobei das Auswählen, durch die Sendeseite, von K zweiten Hilfsträgern aus den N-K zweiten Hilfsträgern Folgendes umfasst:
Auswählen, durch die Sendeseite, aus den N-K zweiten Hilfsträgern, von K zweiten Hilfsträgern, deren entsprechende Kanäle ein maximales SRV aufweisen.

3. Verfahren nach Anspruch 1 oder 2, wobei das Kombinieren, durch die Sendeseite, von Hilfsträgern in den K ersten Hilfsträgern und Hilfsträgern in den K zweiten Hilfsträgern, um M Hilfsträgergruppen zu erhalten, Folgendes umfasst:

fortlaufendes Auswählen, durch die Sendeseite, von A ersten Hilfsträgern aus den K ersten Hilfsträgern und A zweiten Hilfsträgern aus den K zweiten Hilfsträgern und Kombinieren der ausgewählten A ersten Hilfsträger und entsprechenden A zweiten Hilfsträger zu einer Hilfsträgergruppe, bis die M Hilfsträgergruppen erhalten werden, wobei $M = \lfloor K/A \rfloor$.

**4.** Sendeseite, wobei die Sendeseite ein Bestimmungsmodul (1201), ein Gruppierungsmodul (1202) und ein Neuzuweisungsmodul (1203) umfasst, wobei das Bestimmungsmodul (1201) konfiguriert ist, um N Hilfsträger zu bestimmen, die durch Teilen einer Bandbreite erhalten werden, die durch einen Kommunikationskanal belegt sind, wobei die N Hilfsträger K erste Hilfsträger und N-K zweite Hilfsträger umfassen, ein SRV eines Kanals, der jedem der K ersten Hilfsträger entspricht, größer als ein maximales Signal-Rausch-Verhältnis $SRV_{max}$ ist, ein SRV eines Kanals, der jedem der N-K zweiten Hilfsträger entspricht, kleiner oder gleich dem $SRV_{max}$ ist und $0 < K < N/2$ und die Menge $b_i$ von Bits, die auf jedem Hilfsträger geladen sind, Folgendes ist:

$b_i = min(round(log_2(1 + SRV_i)), bit_{max})$, wobei $bit_{max}$ eine maximale Anzahl von Bits darstellt, denen es erlaubt ist, in das Kommunikationssystem geladen zu werden;
das Gruppierungsmodul (1202) für Folgendes konfiguriert ist:

Auswählen von K zweiten Hilfsträgern aus den N-K zweiten Hilfsträgern und Kombinieren von Hilfsträgern in den K ersten Hilfsträgern und Hilfsträgern in den K zweiten Hilfsträgern, um M Hilfsträgergruppen zu erhalten, wobei $0 < M \leq K$; und
ein Zerlegungsmodul (1204) und ein Kommunikationsmodul (1205), wobei das Zerlegungsmodul (1204) konfiguriert ist, um die folgende Zerlegung auf den Kanälen durchzuführen, die den Hilfsträgern in jeder Hilfsträgergruppe entsprechen, durch Verwenden eines Algorithmus einer geometrischen Mittelwert-Zerlegung (GMD):

$H = Q R P*$, wobei die Matrix H eine Matrix der Kanäle ist, die den Hilfsträgern in jeder Hilfsträgergruppe entsprechen, die Matrix Q und die Matrix P unitäre Matrizen sind, die Matrix R eine obere Dreiecksmatrix oder eine untere Dreiecksmatrix ist und diagonale Elemente der Matrix R gleich einem geometrischen Mittelwert von Singularwerten der Matrix H sind;
das Kommunikationsmodul (1205) konfiguriert ist, um die Matrix Q, die erhalten wird, nachdem die Matrix H der Kanäle, die den Hilfsträgern in jeder Hilfsträgergruppe entsprechen, zerlegt wird, an die Empfangsseite zu senden; und
das Neuzuweisungsmodul (1203) für Folgendes konfiguriert ist:
Durchführen eines Neuzuweisungs- und Vorcodierungsverarbeitens auf L Hilfsträgern in einer beliebigen Hilfsträgergruppe und Senden der L Hilfsträger, die nach dem Neuzuweisungs- und Vorcodierungsverarbeiten erhalten werden, an eine Empfangsseite, um die Empfangsseite auszulösen, um die L Hilfsträger, die nach dem Neuzuweisungs- und Vorcodierungsverarbeiten erhalten werden, in L dritte Hilfsträger zu konvertieren, wobei L eine Menge von Hilfsträgern in jeder Hilfsträgergruppe ist, und jedes der SRVs von Kanälen, die dritten Hilfsträgern entsprechen, die erhalten werden, nachdem die Konvertierung für jede Hilfsträgergruppe durchgeführt wird, gleich einem Produkt von SRVs von Kanälen, die allen Hilfsträgern in der Hilfsträgergruppe entsprechen, hoch 1/L ist, wobei eine spezifische Weise, auf die das Neuzuweisungsmodul (1203) ein Neuzuweisungs- und Vorcodierungsverarbeiten auf den L Hilfsträgern in einer beliebigen Hilfsträgergruppe durchführt und die L Hilfsträger, die nach dem Neuzuweisungs- und Vorcodierungsverarbeiten erhalten werden, an die Empfangsseite sendet, um die Empfangsseite auszulösen, um die L Hilfsträger, die nach dem Neuzuweisungs- und Vorcodierungsverarbeiten erhalten werden, in L dritte Hilfsträger zu konvertieren, Folgendes ist:
Durchführen der Neuzuweisungs- und Vorcodierungsverarbeitung für eine beliebige Hilfsträgergruppe durch Verwenden der Matrix P, die sich in der Sendeseite befindet und die erhalten wird, nachdem die Matrix H der Kanäle, die den Hilfsträgern in der Hilfsträgergruppe entsprechen, zerlegt wird, und Senden der Hilfsträgergruppe, die nach dem Neuzuweisungs- und Vorcodierungsverarbeiten erhalten werden, an eine transponiert-konjugierte Matrix Q* der Matrix Q, die sich in der Empfangsseite befindet und die erhalten wird, nachdem die Matrix H der Kanäle, die den Hilfsträgern in der Hilfsträgergruppe entsprechen, zerlegt wird, um eine Konvertierung für jede Hilfsträgergruppe durchzuführen, um die L dritten Hilfsträger zu erhalten, **dadurch gekennzeichnet, dass** eine spezifische Weise, auf die das Gruppierungsmodul (1202) die Hilfsträger in den K ersten Hilfsträgern und die Hilfsträger in den K zweiten Hilfsträgern kombiniert, um die M Hilfsträgergruppen zu erhalten, Folgendes ist:

fortlaufendes Bestimmen, aus den K zweiten Hilfsträgern, unterschiedlicher zweiter Zielhilfsträger für unterschiedliche erste Hilfsträger in den K ersten Hilfsträgern; und

Bestimmen, als eine Hilfsträgergruppe, jeder der K ersten Hilfsträger und eines zweiten Zielhilfsträgers, der für den ersten Hilfsträger bestimmt wird, um die M Hilfsträgergruppen zu erhalten, wobei M gleich K ist, wobei ein $SRV_{X2}$ eines Kanals, der einem zweiten Zielhilfsträger entspricht, der für einen X-ten ersten Hilfsträger in den K ersten Hilfsträgern bestimmt wird, die folgende Bedingung erfüllt:

$$\left|\frac{(SRV_{max})^2}{SRV_{X1}} - SRV_{X2}\right| < \left|SRV_{Y2} - \frac{(SRV_{max})^2}{SRV_{X1}}\right|,$$

wobei das $SRV_{X1}$ ein SRV eines Kanals ist, der dem X-ten ersten Hilfsträger entspricht, das $SNR_{Y2}$ ein SRV eines Kanals ist, der einem beliebigen anderen zweiten Hilfsträger in den K zweiten Hilfsträgern als den zweiten Zielhilfsträgern entspricht, die für die ersten X-1 ersten Hilfsträger in den K ersten Hilfsträger bestimmt werden, und $1 \leq X \leq K$.

5. Sendeseite nach Anspruch 4, wobei eine spezifische Weise, auf die das Gruppierungsmodul (1202) die K zweiten Hilfsträger aus den N-K zweiten Hilfsträgern auswählt, Folgendes ist:
Auswählen, aus den N-K zweiten Hilfsträgern, von K zweiten Hilfsträgern, deren entsprechende Kanäle ein maximales SRV aufweisen.

6. Sendeseite nach einem der Ansprüche 4 oder 5, wobei eine spezifische Weise, auf die das Gruppierungsmodul (1202) die Hilfsträger in den K ersten Hilfsträgern und die Hilfsträger in den K zweiten Hilfsträgern kombiniert, um die M Hilfsträgergruppen zu erhalten, Folgendes ist:
fortlaufendes Auswählen von A ersten Hilfsträgern aus den K ersten Hilfsträgern und A zweiten Hilfsträgern aus den K zweiten Hilfsträgern und Kombinieren der ausgewählten A ersten Hilfsträger und entsprechenden A zweiten Hilfsträger zu einer Hilfsträgergruppe, bis die M Hilfsträgergruppen erhalten werden, wobei M= ⌊K/A⌋.

7. Verarbeitungsverfahren für ein Signal-Rausch-Verhältnis (SRV), wobei das System eine Sendeseite nach einem der Ansprüche 4 bis 6 und eine Empfangsseite umfasst.

**Revendications**

1. Procédé de traitement de rapport signal sur bruit, SNR, le procédé comprenant :

la détermination, par une extrémité d'émission, de N sous-porteuses obtenues en divisant une bande passante occupée par un canal de communication, les N sous-porteuses comprenant K premières sous-porteuses et N-K deuxièmes sous-porteuses, un SNR d'un canal correspondant à chacune des K premières sous-porteuses étant supérieur à un rapport signal sur bruit maximal $SNR_{max}$, un SNR d'un canal correspondant à chacune des N-K deuxièmes sous-porteuses étant inférieur ou égal au $SNR_{max}$, et $0<K<N/2$, et la quantité $b_i$ de bits chargés sur chaque sous-porteuse étant de :

$b_i$ = min(round($\log_2$(1 + $SNR_i$)), $bit_{max}$), $bit_{max}$ représentant une quantité maximale de bits autorisés à être chargés dans le système de communication ;
la sélection, par l'extrémité d'émission, de K deuxièmes sous-porteuses parmi les N-K deuxièmes sous-porteuses ;
la combinaison, par l'extrémité d'émission, des sous-porteuses dans les K premières sous-porteuses et des sous-porteuses dans les K deuxièmes sous-porteuses, pour obtenir M groupes de sous-porteuses, où $0<M\leq K$ ;
la réalisation, par l'extrémité d'émission, de la décomposition suivante sur les canaux correspondant aux sous-porteuses dans chaque groupe de sous-porteuses à l'aide d'un algorithme de décomposition à moyenne géométrique, GMD :

H = QRP*, la matrice H étant une matrice des canaux correspondant aux sous-porteuses dans chaque groupe de sous-porteuses, la matrice Q et la matrice P étant des matrices unitaires, la matrice R étant une matrice triangulaire supérieure ou une matrice triangulaire inférieure, et les éléments diagonaux de la matrice R étant égaux à une moyenne géométrique de valeurs singulières de la matrice H ; et

l'envoi, par l'extrémité d'émission vers l'extrémité de réception, de la matrice Q obtenue après décomposition de la matrice H des canaux correspondant aux sous-porteuses dans chaque groupe de sous-porteuses ; et

la réalisation, par l'extrémité d'émission, d'un traitement de réallocation et de précodage sur L sous-porteuses de tout groupe de sous-porteuses, et l'envoi des L sous-porteuses obtenues après le traitement de réallocation et de précodage vers une extrémité de réception, pour déclencher l'extrémité de réception afin de convertir les L sous-porteuses obtenues après le traitement de réallocation et de précodage en L troisièmes sous-porteuses comprenant :

la réalisation, par l'extrémité d'émission, du traitement de réallocation et de précodage pour tout groupe de sous-porteuses en utilisant la matrice P qui se trouve dans l'extrémité d'émission et qui est obtenue après décomposition de la matrice H des canaux correspondant aux sous-porteuses dans le groupe de sous-porteuses, et l'envoi du groupe de sous-porteuses obtenu après le traitement de réallocation et de précodage à une matrice de transconjuguée Q* de la matrice Q qui se trouve dans l'extrémité de réception et qui est obtenue après décomposition de la matrice H des canaux correspondant aux sous-porteuses dans le groupe de sous-porteuses, afin de réaliser une conversion pour chaque groupe de sous-porteuses pour obtenir les L troisièmes sous-porteuses ; et
la réalisation, par l'extrémité d'émission, d'un traitement de réallocation et de précodage sur L sous-porteuses dans tout groupe de sous-porteuses, et l'envoi des L sous-porteuses obtenues après le traitement de réallocation et de précodage vers une extrémité de réception, pour déclencher l'extrémité de réception afin de convertir les L sous-porteuses obtenues après la réallocation et le traitement de précodage en L troisièmes sous-porteuses, L étant une quantité de sous-porteuses dans chaque groupe de sous-porteuses, et chacun des $SNR_s$ des canaux correspondant aux troisièmes sous-porteuses obtenu après la conversion pour chaque groupe de sous-porteuses étant égal à un produit des $SNR_s$ des canaux correspondant à toutes les sous-porteuses du groupe de sous-porteuses élevées à la puissance de 1/L ;
**caractérisé en ce que** la combinaison comprend :

la détermination de manière séquentielle, par l'extrémité d'émission, à partir des K deuxièmes sous-porteuses, de différentes deuxièmes sous-porteuses cibles pour différentes premières sous-porteuses dans les K premières sous-porteuses ; et
la détermination, par l'extrémité d'émission en tant que groupe de sous-porteuses, de chacune des K premières sous-porteuses et d'une deuxième sous-porteuse cible déterminée pour la première sous-porteuse, pour obtenir les M groupes de sous-porteuses, M étant égal à K, un $SNR_{X2}$ d'un canal correspondant à une deuxième sous-porteuse cible déterminée pour une Xème première sous-porteuse dans les K premières sous-porteuses satisfaisant à la condition suivante :

$$\left| \frac{(SNR_{max})^2}{SNR_{X1}} - SNR_{X2} \right| < \left| SNR_{Y2} - \frac{(SNR_{max})^2}{SNR_{X1}} \right|,$$

le $SNR_{X1}$ étant un SNR d'un canal correspondant à la Xème première sous-porteuse, le $SNR_{Y2}$ étant un SNR d'un canal correspondant à toute deuxième sous-porteuse dans les K deuxièmes sous-porteuses autres que les deuxièmes sous-porteuses cibles déterminées pour les premières X-1 premières sous-porteuses dans les K premières sous-porteuses, et $1 \leq X \leq K$.

**2.** Procédé selon la revendication 1, selon lequel la sélection, par l'extrémité d'émission, de K deuxièmes sous-porteuses parmi les N-K deuxièmes sous-porteuses comprend :
la sélection, par l'extrémité d'émission parmi les N-K deuxièmes sous-porteuses, de K deuxièmes sous-porteuses dont les canaux correspondants ont un SNR maximum.

**3.** Procédé selon la revendication 1 ou 2, selon lequel la combinaison, par l'extrémité d'émission, des sous-porteuses dans les K premières sous-porteuses et des sous-porteuses dans les K deuxièmes sous-porteuses, pour obtenir M groupes de sous-porteuses comprend :
la sélection de manière séquentielle, par l'extrémité d'émission, de A premières sous-porteuses parmi les K premières sous-porteuses et de A deuxièmes sous-porteuses parmi les K deuxièmes sous-porteuses, et la combinaison des A premières sous-porteuses sélectionnées et des A deuxièmes sous-porteuses correspondantes en un groupe de sous-porteuses jusqu'à l'obtention des M groupes de sous-porteuses, où M =⌊K/A⌋.

4. Extrémité de transmission, l'extrémité de transmission comprenant un module de détermination (1201), un module de regroupement (1202) et un module de réallocation (1203), le module de détermination (1201) étant configuré pour déterminer N sous-porteuses obtenues en divisant une bande passante occupée par un canal de communication, les N sous-porteuses comprenant K premières sous-porteuses et N-K deuxièmes sous-porteuses, un SNR d'un canal correspondant à chacune des K premières sous-porteuses étant supérieur à un rapport signal sur bruit maximal $SNR_{max}$, un SNR d'un le canal correspondant à chacune des N-K deuxièmes sous-porteuses étant inférieur ou égal au $SNR_{max}$, et 0<K<N/2, et la quantité $b_i$ de bits chargés sur chaque sous-porteuse étant de :

$b_i$ = min(round($log_2$(1 + $SNR_i$)), $bit_{max}$), $bit_{max}$ représentant une quantité maximale de bits autorisés à être chargés dans le système de communication ;
le module de regroupement (1202) étant configuré pour :

sélectionner K deuxièmes sous-porteuses parmi les N-K deuxièmes sous-porteuses, et combiner des sous-porteuses dans les K premières sous-porteuses et des sous-porteuses dans les K deuxièmes sous-porteuses, pour obtenir M groupes de sous-porteuses, où 0<M≤K ; et
un module de décomposition (1204) et un module de communication (1205), le module de décomposition (1204) étant configuré pour réaliser la décomposition suivante sur les canaux correspondant aux sous-porteuses dans chaque groupe de sous-porteuses en utilisant un algorithme de décomposition à moyenne géométrique, GMD:

H = Q R P*, la matrice H étant une matrice des canaux correspondant aux sous-porteuses dans chaque groupe de sous-porteuses, la matrice Q et la matrice P étant des matrices unitaires, la matrice R étant une matrice triangulaire supérieure ou une matrice triangulaire inférieure, et les éléments diagonaux de la matrice R étant égaux à une moyenne géométrique de valeurs singulières de la matrice H ;
le module de communication (1205) étant configuré pour envoyer, vers l'extrémité de réception, la matrice Q obtenue après décomposition de la matrice H des canaux correspondant aux sous-porteuses dans chaque groupe de sous-porteuses ; et
le module de réallocation (1203) étant configuré pour :
réaliser un traitement de réallocation et de précodage sur L sous-porteuses dans tout groupe de sous-porteuses, et envoyer les L sous-porteuses obtenues après le traitement de réallocation et de précodage à une extrémité de réception, pour déclencher l'extrémité de réception afin de convertir les L sous-porteuses obtenues après le traitement de réallocation et de précodage en L troisièmes sous-porteuses, L étant une quantité de sous-porteuses dans chaque groupe de sous-porteuses, et chacun des $SNR_s$ des canaux correspondant aux troisièmes sous-porteuses obtenues après la conversion pour chaque groupe de sous-porteuses étant égal à un produit des $SNR_s$ des canaux correspondant à toutes les sous-porteuses du groupe de sous-porteuses élevées à la puissance de 1/L, une manière spécifique selon laquelle le module de réallocation (1203) réalise le traitement de réallocation et de précodage sur les L sous-porteuses de tout groupe de sous-porteuses, et envoie les L sous-porteuses obtenues après le traitement de réallocation et de précodage au réception, pour déclencher l'extrémité de réception afin de convertir les L sous-porteuses obtenues après le traitement de réallocation et de précodage en L troisièmes sous-porteuses étant :
la réalisation du traitement de réallocation et de précodage pour tout groupe de sous-porteuses en utilisant la matrice P qui se trouve à l'extrémité d'émission et qui est obtenue après décomposition de la matrice H des canaux correspondant aux sous-porteuses dans le groupe de sous-porteuses, et l'envoi du groupe de sous-porteuses obtenu après le traitement de réallocation et de précodage à une matrice de transconjuguée Q* de la matrice Q qui se trouve dans l'extrémité de réception et qui est obtenue après la décomposition de la matrice H des canaux correspondant aux sous-porteuses dans le groupe de sous-porteuses, pour réaliser une conversion pour chaque groupe de sous-porteuse pour obtenir les L troisièmes sous-porteuses, **caractérisé en ce qu'**une manière spécifique selon laquelle le module de regroupement (1202) combine les sous-porteuses dans les K premières sous-porteuses et les sous-porteuses dans les K deuxièmes sous-porteuses, pour obtenir les M groupes de sous-porteuses est :

la détermination de manière séquentielle, à partir des K deuxièmes sous-porteuses, de différentes deuxièmes sous-porteuses cibles pour différentes premières sous-porteuses dans les K premières sous-porteuses ; et

la détermination, en tant que groupe de sous-porteuses, de chacune des K premières sous-porteuses et d'une deuxième sous-porteuse cible déterminée pour la première sous-porteuse, pour obtenir les M groupes de sous-porteuses, M étant égal à K, un $SNR_{X2}$ d'un canal correspondant à une deuxième sous-porteuse cible déterminée pour une Xème première sous-porteuse dans les K premières sous-porteuses satisfaisant à la condition suivante :

$$\left| \frac{(SNR_{max})^2}{SNR_{X1}} - SNR_{X2} \right| < \left| SNR_{Y2} - \frac{(SNR_{max})^2}{SNR_{X1}} \right|,$$

le $SNR_{X1}$ étant un SNR d'un canal correspondant à la Xème première sous-porteuse, le $SNR_{Y2}$ étant un SNR d'un canal correspondant à toute deuxième sous-porteuse dans les K deuxièmes sous-porteuses autres que les deuxièmes sous-porteuses cibles déterminées pour les premières X-1 premières sous-porteuses dans les K premières sous-porteuses, et $1 \leq X \leq K$.

5. Extrémité d'émission selon la revendication 4, dans laquelle une manière spécifique selon laquelle le module de regroupement (1202) sélectionne les K deuxièmes sous-porteuses parmi les N-K deuxièmes sous-porteuses est : la sélection, parmi les N-K deuxièmes sous-porteuses, des K deuxièmes sous-porteuses dont les canaux correspondants ont un SNR maximum.

6. Extrémité d'émission selon l'une quelconque des revendications 4 ou 5, dans laquelle une manière spécifique selon laquelle le module de regroupement (1202) combine les sous-porteuses dans les K premières sous-porteuses et les sous-porteuses dans les K deuxièmes sous-porteuses, pour obtenir les M groupes de sous-porteuses est : la sélection de manière séquentielle de A premières sous-porteuses parmi les K premières sous-porteuses et de A deuxièmes sous-porteuses parmi les K deuxièmes sous-porteuses, et la combinaison des premières sous-porteuses A sélectionnées et des deuxièmes sous-porteuses correspondantes en un groupe de sous-porteuses jusqu'à ce que les M groupes de sous-porteuses soient obtenus, où M = ⌊K/A⌋.

7. Système de traitement de rapport signal sur bruit, SNR, le système comprenant une extrémité d'émission selon l'une quelconque des revendications 4 à 6 et une extrémité de réception.

FIG. 1

FIG. 2

Communication channel

| Transmit end | ◄────╱────► | Receive end |

FIG. 3

A transmit end determines N subcarriers obtained by dividing a bandwidth occupied by a communication channel — 401

The transmit end selects K second subcarriers from N–K second subcarriers — 402

The transmit end combines subcarriers in the K first subcarriers and subcarriers in the K second subcarriers, to obtain M subcarrier groups — 403

Perform reallocation and precoding processing on L subcarriers in any subcarrier group, and send the L subcarriers obtained after the reallocation and precoding processing to a receive end, to trigger the receive end to convert the L subcarriers obtained after the reallocation and precoding processing into L third subcarriers — 404

FIG. 4

S

X → [ V ] → [ H=USV* ] → ⊕ ← z → [ U* ] → y → [ S⁻¹ ] →

FIG. 5

EP 3 404 881 B1

First SNR reallocation module

Second SNR
reallocation module

TX THP

Channel and noise

RX THP

z

x → ⊕ → $\Gamma_M$ → x' → P → H=QRP* → ⊕ → Q* → y' → $S^{-1}$ → $\Gamma_M$ → x

I-$S^{-1}$R

FIG. 6

Transmit end

Subcarrier $f_{hi}$
$SNR_{hi} > SNR_{max}$

Subcarrier $f_{li}$
$SNR_{li} < SNR_{max}$

TX SNR reallocation module Group i

Subcarrier $f_{hK}$
$SNR_{hK} > SNR_{max}$

Subcarrier $f_{lk}$
$SNR_{lK} < SNR_{max}$

TX SNR reallocation module Group K

Other subcarriers that are not grouped

Communication channel H

Receive end

RX SNR reallocation module Group i

Subcarrier $f_{hi}$
$SNR_{outi} \approx SNR_{max}$

Subcarrier $f_{li}$
$SNR_{outi} \approx SNR_{max}$

RX SNR reallocation module Group K

Subcarrier $f_{hK}$
$SNR_{outK} \approx SNR_{max}$

Subcarrier $f_{lK}$
$SNR_{outK} \approx SNR_{max}$

Other subcarriers that are not grouped

FIG. 7

EP 3 404 881 B1

FIG. 8

Receive end

RX SNR reallocation module Group 1

$f_{h1}, f_{h2}, \ldots, f_{hblksize}$
$SNR <= SNR_{max}$

$f_{l1}, f_{l2}, \ldots, f_{lblksize}$
$SNR <= SNR_{max}$

RX SNR reallocation module Group j

$f_{hj*blksize+1}, f_{hj*blksize+2}, \ldots, f_{hj*blksize+blksize}$
$SNR <= SNR_{max}$

$f_{lj*blksize+1}, f_{lj*blksize+2}, \ldots, f_{lj*blksize+blksize}$
$SNR <= SNR_{max}$

Other subcarriers that are not grouped

Communication channel

Blksize=H (half of a quantity of subcarriers included in each subcarrier group)

Transmit end

TX SNR reallocation module Group 1

TX SNR reallocation module Group j

$f_{h1}, f_{h2}, \ldots, f_{hH}$
$SNR > SNR_{max}$

$f_{l1}, f_{l2}, \ldots, f_{lH}$
$SNR < SNR_{max}$

$f_{hj*blksize+1}, f_{hj*blksize+2}, \ldots, f_{hj*blksize+blksize}$
$SNR > SNR_{max}$

$f_{lj*blksize+1}, f_{lj*blksize+2}, \ldots, f_{lj*blksize+blksize}$
$SNR > SNR_{max}$

Other subcarriers that are not grouped

28

FIG. 9B

FIG. 9A

CONT.
FROM
FIG. 9A

FIG. 9B

EP 3 404 881 B1

FIG. 10A

FIG. 10B

EP 3 404 881 B1

TO
FIG. 11B

FIG. 11A

EP 3 404 881 B1

CONT.
FROM
FIG. 11A

FIG. 11B

```
┌─────────────────────────────────────┐
│   ┌──────────────────────┐  1201     │
│   │  Determining module  │ ⟋         │
│   └──────────────────────┘           │
│              │                       │
│   ┌──────────────────────┐  1202     │
│   │   Grouping module    │ ⟋         │
│   └──────────────────────┘           │
│              │                       │
│   ┌──────────────────────┐  1203     │
│   │  Reallocation module │ ⟋         │
│   └──────────────────────┘           │
│                                      │
│            Transmit end              │
└─────────────────────────────────────┘
```

FIG. 12

```
┌────────────────────────────────────────────────────────┐
│   ┌──────────────────────┐  1201                        │
│   │  Determining module  │ ⟋                            │
│   └──────────────────────┘                              │
│             │                                           │
│   ┌──────────────────────┐  1202                        │
│   │   Grouping module    │ ⟋                            │
│   └──────────────────────┘                   1204       │
│             │                               ⟋           │
│   ┌──────────────────────┐  1203  ┌──────────────────┐  │
│   │  Reallocation module │⟋───────│  Decomposition   │  │
│   └──────────────────────┘        │     module       │  │
│             │                     └──────────────────┘  │
│   ┌──────────────────────┐  1205                        │
│   │   Communications     │ ⟋                            │
│   │      module          │                              │
│   └──────────────────────┘                              │
│                                                         │
│               Transmit end                              │
└────────────────────────────────────────────────────────┘
```

FIG. 13

1401

Processor

1404

1402

Program code

Memory

1403

Communications
interface

Transmit end

FIG. 14

Communication
channel

Transmit end ◀━━━━ ━━━━▶ Receive end

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7711066 B2

### Non-patent literature cited in the description

- **RUI CHEN et al.** Inter-carrier cooperative coding/decoding for 0FDM systems using geometric mean decomposition. *Wireless Communications, Networking And Information Security (WCNIS),* 2010
- **EDWARD PEH et al.** Power and Modulo Loss Tradeoff for Tomlinson-Harashima Precoding Applied to Geometric Mean Decomposition based MIMO Systems. *IEEE International Symposium on Personal, Indoor and Mobile Radio Communications, PIMRC,* 2007

- **SHAOWEI LIN et al.** Block-Diagonal Geometric Mean Decomposition (BD-GMD) for Multiuser MIMO Broadcast Channels. *Personal, Indoor and Mobile Radio Communications,* 2006